# EUROPÄISCHE PATENTSCHRIFT

(11) **EP 1 379 598 B1**
(45) Veröffentlichungstag und Bekanntmachung des Hinweises auf die Patenterteilung: **12.09.2007**
(21) Anmeldenummer: 02706781.8
(22) Anmeldetag: 20.03.2002
(51) Int. Cl.: C09D 175/16, C09D 201/02, C08G 18/67, C08G 18/38

(54) **UNGESÄTTIGTE VERBINDUNGEN MIT CARBAMAT- ODER HARNSTOFFENDGRUPPEN**
UNSATURATED COMPOUNDS CONTAINING CARBAMATE TERMINAL GROUPS OR UREA TERMINAL GROUPS
COMPOSES INSATURES CONTENANT DES GROUPES TERMINAUX CARBAMATE OU UREE

(30) Priorität: 23.03.2001 DE 10114689
(43) Veröffentlichungstag der Anmeldung: 14.01.2004
(73) Patentinhaber: BASF Aktiengesellschaft, 67056 Ludwigshafen (DE)
(72) Erfinder: SCHWALM, Reinhold, 67157 Wachenheim (DE); MEISENBURG, Uwe, 47051 Duisburg (DE)
(86) Internationale Anmeldenummer: PCT/EP2002/003280
(87) Internationale Veröffentlichungsnummer: WO 2002/086000

(56) Entgegenhaltungen:
- EP-A- 0 618 244
- EP-A- 0 832 950
- WO-A-01/46285
- WO-A-92/20724
- FR-A- 2 393 827

## Beschreibung

Die Erfindung betrifft ungesättigte Verbindungen mit Carbamat-oder Harnstoffendgruppen und deren Verwendung in Dual Cure Systemen.

Dual Cure Systeme zeichnen sich dadurch aus, daß sie durch zwei unabhängige Härtungsmechanismen aushärtbar sind, z.B. Strahlungs-, Feuchtigkeits-, oxidative oder thermische Härtung. Besonders gewünscht werden solche Systeme, die sich nach dem Auftrag des Beschichtungsmittels durch möglichst kurze Bestrahlung mit UV-Licht zu einem flexiblen Film, der staubtrocken ist, vorhärten lassen. Dieser Film soll dann entweder thermisch nachhärtbar sein oder im Verlauf einiger Tage durch einfache Lagerung an der Luft weiter aushärten, bis ein harter Film entstanden ist, der die endgültigen gewünschten Gebrauchseigenschaften aufweist. Diese Art der zweistufigen Härtung ist deshalb von besonderer Bedeutung, weil es den Verarbeitern der Beschichtungsmittelsysteme die Möglichkeit gibt, in einem ersten Arbeitsschritt einen Gegenstand mit einem Film zu beschichten und diesen Film in einem zweiten Arbeitsschritt weiterzuverarbeiten, insbesondere dem bereits beschichteten Gegenstand nach der Bestrahlung unter Anwendung von Druck ein bestimmtes Profil zu verleihen. Die Filme bzw. Folien müssen also bei ihrer Verformung im zweiten Arbeitsschritt bereits vorgehärtet sein, so daß sie bei der Verformung nicht an den Werkzeugen kleben bleiben, andererseits dürfen sie jedoch noch nicht so hart sein, daß sie bei der Dehnung und Verformung reißen.

Mit dem Begriff "Dual Cure" ist erfindungsgemäß ein Härtungsprozeß bezeichnet, der über mindestens zwei Mechanismen erfolgt, und zwar strahlungs-, feuchtigkeits-, oxidativ oder thermisch härtend.

Dual Cure Beschichtungen, die photochemisch polymerisierbar sind und über einen sekundären Härtungsmechanismus verfügen, z.B. über Alkoxysilangruppen, sind aus US 5 523 443 bekannt; solche Strukturen können auch Carbamatbindungen enthalten. Diese Schrift beschreibt polymerisierbare Systeme, die sowohl durch ultraviolette Bestrahlung als auch über einen weiteren Mechanismus härtbar sind. Diese Systeme bestehen aus einem Alkoxysilyl-Urethan-(Meth)acrylat und einem (Meth)acrylat oder Vinylether als Reaktivverdünner.

Weiterhin sind aus US 5 075 384 ungesättigte Carbamate bekannt, welche durch Reaktion von ungesättigten Isocyanaten mit den Hydroxygruppen von Styrol-Allylalkohol Copolymeren erhalten werden. Die dabei gebildeten Carbamatgruppen dienen lediglich als Bindeglied zur Einführung von ungesättigten Gruppen. Die dort beschriebenen Systeme sind UV-härtbar und oxidativ trocknend.

Weitere Schriften, z.B. US 4 138 299, US 4 173 682, US 4 415 604, und EP-A 549 116, beschreiben Harze, welche durch Strahlung und Luftfeuchtigkeit gehärtet werden können. Sowohl die oxidative Trocknung als auch die Lufthärtung sind jedoch sehr langsame und unkontrolliert ablaufende Prozesse.

US 4 138 299 beschreibt ein strahlungs- und feuchtigkeitshärtbares Beschichtungssystem, das aus 15 - 60 Gew.-% Acrylat als Reaktivverdünner und 40 - 85 Gew.-% eines isocyanatterminierten Präpolymers, das durch Reaktion von Polyesterdi- und -triolen mit aliphatischen Diisocyanaten gebildet wird, wobei 5 - 15 % der verfügbaren Isocyanatgruppen mit Hydroxyacrylaten zur Reaktion gebracht werden, besteht.

US 4 173 682 beschreibt ein Verfahren zum Beschichten eines Substrates mit einer strahlungs- und feuchtigkeitshärtbaren Beschichtung, die ein isocyanatgruppenhaltiges Addukt aus einem (Meth)acrylsäurehydroxyester und einem Polyisocyanat, einer polyfunktionellen Hydroxyverbindung und einem Photoinitiator enthält. Die Komponenten können erst kurz vor der Applikation vereinigt werden, um eine ungewünschte Aushärtung zu vermeiden.

US 4 415 604 beschreibt eine UV- und feuchtigkeitshärtbare Beschichtungszusammensetzung aus einem isocyanatendgruppenhaltigen Polyetherdi- oder -triol, einem (Meth)acrylat als Reaktivverdünner und einem Polymerisationsinitiator.

EP-A 549 116 beschreibt eine Dual Cure Zusammensetzung, die Reaktivverdünner und ein Isocyanataddukt, das freie Isocyanatgruppen und freie, photopolymerisierbare, ethylenisch ungesätigte Gruppen trägt, enthält.

Solche ungesättigten Isocyanatoacrylate, die neben den photochemisch härtbaren Acrylatgruppen noch freie Isocyanate enthalten, sind jedoch nicht lagerstabil beziehungsweise müssen aufwendig unter Feuchtigkeitsausschluß gelagert werden.

In EP-A 844 286 wird ein Pulverbeschichtungssystem für Pulverlacke beschrieben, welches neben einem UV-Radikalinitiator auch einen thermisch aktivierbaren Initiator enthält. In dieser Schrift wird darauf hingewiesen, daß flüssige Systeme auf Basis thermischer Peroxidinitiatoren nur relativ kurze Lagerstabilitäten aufweisen.

Weiterhin sind rein thermisch härtende Systeme bekannt, die über Carbamate oder Harnstoffe vernetzen, z.B. aus US 5 770 650. US 5 770 650 beschreibt eine härtbare Zusammensetzung mit Carbamat-oder Harnstoff- und Ester- oder Amidgruppen und einem härtenden Reagens. Die Möglichkeit einer UV-Härtung wird nicht in Betracht gezogen.

Bekannt sind weiterhin ungesättigte Isocyanatoacrylate, die neben den photochemisch härtbaren Acrylatgruppen noch freie Isocyanate enthalten. Solche Bindemittel sind jedoch nicht lagerstabil.

Lagerstabiler sind aus DE-A 26 31 949 bekannte strahlungs- und thermisch härtbare Bindemittel mit verkappten Polyisocyanaten. DE-A 26 31 949 beschreibt strahlenhärtbare Bindemittel, die ein verkapptes Polyisocyanat, in Form von Oxim, Malonester, Acetessigester, Caprolacton, Phenol etc., enthalten. Die dabei gebildeten Lackfilme werden thermisch nachbehandelt. Der dort beschriebene Weg der thermischen Vernetzung über die Rückspaltung von Isocyanaten ist jedoch nicht immer unproblematisch angesichts der entstehenden Spaltprodukte (z.B. Pyrazole, Triazole), die teilweise im Film verbleiben und z.B. als Weichmacher wirken. Daher besteht weiterhin ein Bedarf an alternativen Vernetzungsmechanismen.

Aus FR-A-2 393 827 sind höhermolekulare Umsetzungsprodukte von Diisocyanaten, Polyolen und monohydroxyl-haltigen Acrylaten bekannt. Nicht offenbart wird die Einführung von Carbamat- oder Harnstoffendgruppen in derartige Umsetzungsprodukte.

Aufgabe der vorliegenden Erfindung war es, Dual Cure Systeme für strahlen- und thermische Härtung zur Verfügung zu stellen, die lagerstabil sind und in Kondensationsreaktionen nur leichtflüchtige Abspaltprodukte freisetzen.

Die Aufgabe konnte mit Verbindungen gelöst werden, die mindestens eine ungesättigte radikalisch oder kationisch polymerisierbare Gruppe und mindestens eine Carbamat- und/oder Harnstoffendgruppe enthalten.

Das zahlenmittlere Molekulargewicht Mₙ dieser Verbindungen, bestimmt durch Gelpermeationschromatographie mit Tetrahydrofuran als Elutionsmittel und Polystyrol als Standard, kann beispielsweise zwischen 200 und 200000, bevorzugt zwischen 250 und 100000, besonders bevorzugt zwischen 350 und 50000 und insbesondere zwischen 500 und 30000 g/mol betragen.

Der Gehalt an ungesättigten radikalisch oder kationisch polymerisierbaren Gruppen kann beispielsweise mindestens 0,01 mol/100 g Verbindung, bevorzugt mindestens 0,05, besonders bevorzugt mindestens 0,1 und insbesondere mindestens 0,2 mol/100 g betragen.

Der Gehalt an Carbamat- und/oder Harnstoffendgruppen kann beispielsweise mindestens 0,01 mol/100 g Verbindung, bevorzugt mindestens 0,05, besonders bevorzugt mindestens 0,1 und insbesondere mindestens 0,2 mol/100 g betragen.

Dabei können die radikalisch oder kationisch polymerisierbaren Gruppen und die Carbamat- und/oder Harnstoffendgruppen beliebig mit einander verbunden sein, z.B. an Polymere, Polykondensate oder Polyaddukte gebunden.

Dies können beispielsweise Polymere oder Copolymere aus an sich bekannten Monomeren, Polyester, Polyamide, Polyimide, Polyurethane, Polyharnstoffe, Polyepoxide oder Polyether sein.

Monomere, aus denen Polymere oder Copolymere aufgebaut sein können sind z.B. Ester der (Meth)acrylsäure mit Alkoholen, die 1 bis 20 C-Atome aufweisen, z.B. (Meth)acrylsäuremethylester, (Meth)acrylsäureethylester, (Meth)acrylsäure-n-butylester, (Meth)acrylsäure-2-ethylhexylester, vinylaromatische Verbindungen, z.B. Styrol, Divinylbenzol, α, β-ungesättigte Nitrile, z.B. Acrylnitril, Methacrylnitril, Vinylester, z.B. Vinylacetat, Vinylpropionat, halogenierte ethylenisch ungesättigte Verbindungen, z.B. Vinylchlorid, Vinylidenchlorid, konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, N-Vinylformamid, Allylessigsäure, Vinylessigsäure, monoethylenisch ungesättigte Carbonsäuren mit 3 bis 8 C-Atomen sowie deren wasserlöslichen Alkalimetall-, Erdalkalimetall- oder Ammoniumsalze wie beispielsweise: Acrylsäure, Methacrylsäure, Dimethylacrylsäure, Ethacrylsäure, Maleinsäure, Citraconsäure, Methylenmalonsäure, Crotonsäure, Fumarsäure, Mesaconsäure und Itaconsäure, Maleinsäure, N-Vinylpyrrolidon, N-Vinyllactame, wie z.B. N-Vinylcaprolactam, N-Vinyl-N-Alkyl-carbonsäureamide oder N-Vinyl-carbonsäureamide, wie z. B. N-Vinylacetamid, N-Vinyl-N-methylformamid und N-Vinyl-N-methylacetamid, Vinylether, z.B. Methylvinylether, Ethylvinylether, n-Propylvinylether, *iso*-Propylvinylether, n-Butylvinylether, sek-Butylvinylether, *iso*-Butylvinylether, *tert*-Butylvinylether, 4-Hydroxybutylvinylether sowie Gemische davon.

Bevorzugt ist dabei die Bindung der radikalisch oder kationisch polymerisierbaren Gruppen und der Carbamat- oder Harnstoffendgruppen an Polyurethane.

Die erfindungsgemäßen Polyurethane (A) enthalten als Aufbaukomponenten im wesentlichen:
a) mindestens ein organisches aliphatisches, aromatisches oder cycloaliphatisches Di- oder Polyisocyanat,
b) mindestens eine Verbindung mit mindestens einer gegenüber Isocyanat reaktiven Gruppe und mindestens einer radikalisch polymerisierbaren ungesättigten Gruppe und/oder einer kationisch polymerisierbaren Gruppe,
c) mindestens eine Verbindung mit mindestens einer gegenüber Isocyanat reaktiven Gruppe und einer Carbamat- oder Harnstoffendgruppierung,
d) gegebenenfalls mindestens eine Verbindung mit mindestens einer gegenüber Isocyanat reaktiven Gruppe und mindestens einer dispergieraktiven Gruppe,
e) gegebenenfalls mindestens eine Verbindung mit mindestens zwei gegenüber Isocyanat reaktiven Gruppen sowie
f) gegebenenfalls von a) bis d) verschiedene Verbindungen mit mindestens einer gegenüber Isocyanat reaktiven Gruppe.

Weitere erfindungsgemäße Polyurethane enthalten zusätzlich als Komponente (B) mindestens eine Verbindung, die mindestens eine Gruppe enthält, die mit den Carbamatgruppen vernetzen kann. Weiterhin wurden wäßrig verarbeitbare Polyurethandispersionen gefunden, die die Aufgabe ebenfalls lösen und im wesentlichen enthalten
(A) ein Polyurethan, in dem d) als Aufbaukomponente vorhanden ist,
(B) mindestens eine Verbindung, die mindestens eine Gruppe enthält, die mit den Carbamatgruppen vernetzen kann,
(C) gegebenenfalls einen oder mehrere photochemisch und/oder thermisch aktivierbare(n) Initiator(en), sowie
(D) gegebenenfalls weitere lacktypische Additive.

Die Verbindungen (B), (C) und (D) können auch den Polyurethanen zugesetzt werden, wenn man Lackformulierungen zur Herstellung von Dual Cure Lacken bereiten will.

Als Komponente a) kommen beispielsweise aliphatische, aromatische und cycloaliphatische Di- und Polyisocyanate mit einer NCO Funktionalität von mindestens 1,8, bevorzugt 1,8 bis 5 und besonders bevorzugt 2 bis 4 in Frage, sowie deren Isocyanurate, Biurete, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1, 6-Diisocyanatohexan), Octamethylendiisocyanat, Decamethylendiisocyanat, Dodecamethylendiisocyanat, Tetradecamethylendiisocyanat, Derivate des Lysindiisocyanates, Tetramethylxylylendiisocyanat, Trimethylhexandiisocyanat oder Tetramethylhexandiisocyanat, cycloaliphatische Diisocyanate wie 1,4-, 1,3-oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan(Isophorondiisocyanat), 1,3- oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Es können auch Gemische der genannten Diisocyanate vorliegen.

Bevorzugt sind Hexamethylendiisocyanat, 1,3-Bis(isocyanatomethyl)cyclohexan, Isophorondiisocyanat und Di(isocyanatocyclohexyl)methan.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiondiisocyanate können in den erfindungsgemäßen Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6) Uretonimin-modifizierte Polyisocyanate.

Die Polyisocyanate 1) bis 6) können im Gemisch, gegebenenfalls auch im Gemisch mit Diisocyanaten, eingesetzt werden.

Als Komponente b) kommen Verbindungen in Betracht, die mindestens eine gegenüber Isocyanat reaktive Gruppe und mindestens eine radikalisch oder kationisch polymerisierbare Gruppe tragen.

Gegenüber Isocyanat reaktive Gruppen können z.B. sein -OH, -SH, -NH₂ und -NHR⁴, wobei R⁴ die unten angegebene Bedeutung hat, jedoch von den dort verwendeten Resten verschieden sein kann.

Polymerisierbare Gruppen können solche sein, die ungesättigte Bindungen aufweisen, bevorzugt Kohlenstoff-Kohlenstoff-Doppelbindungen.

Radikalisch polymerisierbare Gruppen sind beispielsweise isolierte ethylenisch ungesättigte Gruppen, konjugierte ungesättigte Gruppen, vinylaromatische Gruppen, vinyl- und vinylidenchloridische Gruppen, N-Vinylamide, Vinylpyrrolidone, Vinyllactame, Vinylester, (Meth)acrylester oder Acrylnitrile.

Kationisch polymerisierbare Gruppen sind beispielsweise Isobutyleneinheiten oder Vinylether.

Komponenten b) können z.B. Monoester von α, β-ungesättigten Carbonsäuren, wie Acrylsäure, Methacrylsäure (im folgenden kurz als "(Meth)acrylsäure" bezeichnet), Crotonsäure, Itaconsäure, Fumarsäure, Maleinsäure, Acrylamidoglykolsäure, Methacrylamidoglykolsäure oder Vinylether mit Di- oder Polyolen sein, die vorzugsweise 2 bis 20 C-Atome und wenigstens zwei Hydroxylgruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 378, Poly-1,3-propandiol mit einem Molgewicht zwischen 134 und 400 oder Polyethylenglykol mit einem Molgewicht zwischen 238 und 458. Weiterhin können auch Ester oder Amide der (Meth)acrylsäure mit Aminoalkoholen z. B. 2-Aminoethanol, 2-(Methylamino)ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin, oder Vinylessigsäure verwendet werden.

Weiterhin sind auch ungesättigte Polyether- oder Polyesterole oder Polyacrylatpolyole mit einer mittleren OH-Funktionalität von 2 bis 10 geeignet.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxapentyl(meth)acrylamid, N-Hydroxyalkylcrotonamide wie N-Hydroxymethylcrotonamid oder N-Hydroxyalkylmaleinimide wie N-Hydroxyethylmaleinimid.

Bevorzugt verwendet werden 2-Hydroxyethyl(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat, Pentaerythritmono-, -di- und -tri(meth)acrylat sowie 4-Hydroxybutylvinylether, 2-Aminoethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl(meth)-acrylamid, 2-Aminopropyl(meth)acrylamid, 3-Aminopropyl(meth)-acrylamid, 2-Hydroxyethyl(meth)acrylamid, 2-Hydroxypropyl(meth)-acrylamid oder 3-Hydroxypropyl(meth)acrylamid. Besonders bevorzugt sind 2-Hydroxyethylacrylat, 2-Hydroxyethylmethacrylat, 2- oder 3-Hydroxypropylacrylat, 1,4-Butandiolmonoacrylat und 3-(Acryloyloxy)-2-hydroxypropylmethacrylat.

Als Komponente c) kommen Verbindungen der Formel

R-O-(CO)-NH-R¹ oder

R-(NR¹)-(CO)-NH-R²

wobei
R ein 2 bis 20 Kohlenstoffatome aufweisender, aliphatischer, cycloaliphatischer oder aromatischer Rest ist, der mindestens eine gegenüber Isocyanaten reaktive Gruppierung, wie -OH, -NH₂, -NHR⁴ oder -SH, enthalten muß und
R¹, R² und R⁴ unabhängig voneinander Wasserstoff oder eine 1 bis 4 Kohlenstoffatome enthaltende Alkylgruppe bedeuten.

Somit ist erfindungsgemäß eine Carbamatendgruppe als Carbaminsäureester zu verstehen, der über das Sauerstoffatom mit dem Rest R verknüpft ist und nicht als instabile Carbaminsäure, die über das Stickstoffatom gebunden ist.

R¹, R² und R⁴ können darin unabhängig voneinander Wasserstoff, Methyl, Ethyl, *iso*-Propyl, n-Propyl, n-Butyl, *iso*-Butyl, sek-Butyl oder *tert*-Butyl bedeuten. Weiterhin können R¹ und R² auch gemeinsam einen Ring bilden, in dem R¹ und R² als Brücke fungieren, z.B. 1,2-Ethylen, 1,2-Propylen, 1,3-Propylen oder 1,4-Butylen.

R kann darin bedeuten

Hydroxymethyl, 2-Hydroxyethyl, 2-Hydroxypropyl, 3-Hydroxypropyl, 2-Hydroxybutyl, 4-Hydroxybutyl, 6-Hydroxyhexyl, 8-Hydroxyoctyl, 10-Hydroxydecyl, 12-Hydroxydodecyl, 2-Hydroxycyclopentyl, 3-Hydroxycyclopentyl, 2-Hydroxycyclohexyl, 3-Hydroxycyclohexyl, 4-Hydroxycyclohexyl, 5-Hydroxy-3-oxa-pentyl, 8-Hydroxy-3,6-dioxa-octyl, 7-Hydroxy-4-oxa-heptyl, 3-Hydroxy-2-ethyl-hexyl, 3-Hydroxy-2,4-diethyl-octyl, 2,2-Di(hydroxymethyl)butyl, 2,2-Di(hydroxymethyl)propyl, 2,2,2-Tri(hydroxymethyl)ethyl, 2-Hydroxymethyl-2,2-dimethyl-ethyl, Thiomethyl, 2-Thioethyl, 2-Thiopropyl, 3-Thiopropyl, 2-Thiobutyl, 4-Thiobutyl, 6-Thiohexyl, 8-Thiooctyl, 10-Thiodecyl, 12-Thiododecyl, 2-Thiocyclopentyl, 3-Thiocyclopentyl, 2-Thiocyclohexyl, 3-Thiocyclohexyl, 4-Thiocyclohexyl, 5-Thio-3-oxa-pentyl, 8-Thio-3,6-dioxa-octyl, 7-Thio-4-oxa-heptyl, 3-Thio-2-ethyl-hexyl, 3-Thio-2,4-diethyl-octyl, Aminomethyl, 2-Aminoethyl, 2-Aminopropyl, 3-Aminopropyl, 2-Aminobutyl, 4-Aminobutyl, 6-Aminohexyl, 8-Aminooctyl, 10-Aminodecyl, 12-Aminododecyl, 2-Aminocyclopentyl, 3-Aminocyclopentyl, 2-Aminocyclohexyl, 3-Aminocyclohexyl, 4-Aminocyclohexyl, 5-Amino-3-oxa-pentyl, 8-Amino-3,6-dioxa-octyl, 7-Amino-4-oxa-heptyl, 3-Amino-2-ethylhexyl, 3-Amino-2,4-diethyl-octyl, 3-Amino-3,5,5-trimethylcyclohexyl, (N-Methylamino)-methyl, 2-(N-Methylamino)-ethyl, 2-(N-Methylamino)-propyl, 3-(N-Methylamino)-propyl, 2-(N-Methylamino)-butyl, 4-(N-Methylamino)-butyl, 6-(N-Methylamino)-hexyl, 8-(N-Methylamino)-octyl, 10-(N-Methylamino)-decyl, 12-(N-Methylamino)-dodecyl, 2-(N-Methylamino)-cyclopentyl, 3-(N-Methylamino)-cyclopentyl, 2-(N-Methylamino)-cyclohexyl, 3-(N-Methylamino)-cyclohexyl, 4-(N-Methylamino)-cyclohexyl, 5-(N-Methylamino)-3-oxa-pentyl, 8-(N-Methylamino)-3,6-dioxa-octyl, 7-(N-Methylamino)-4-oxa-heptyl, 3-(N-Methylamino)-2-ethyl-hexyl, 3-(N-Methylamino)-2,4-diethyl-octyl, (N-Methylamino)-methyl, 2-(N-Ethylamino)-ethyl, 2-(N-Ethylamino)-propyl, 3-(N-Ethylamino)-propyl, 2-(N-Ethylamino)-butyl, 4-(N-Ethylamino)-butyl, 6-(N-Ethylamino)-hexyl, 8-(N-Ethylamino)-octyl, 10-(N-Ethylamino)-decyl, 12-(N-Ethylamino)-dodecyl, 2-(N-Ethylamino)-cyclopentyl, 3-(N-Ethylamino)-cyclopentyl, 2-(N-Ethylamino)-cyclohexyl, 3-(N-Ethylamino)-cyclohexyl, 4-(N-Ethylamino)-cyclohexyl, 5-(N-Ethylamino)-3-oxa-pentyl, 8-(N-Ethylamino)-3,6-dioxa-octyl, 7-(N-Ethylamino)-4-oxa-heptyl, 3-(N-Ethylamino)-2-ethyl-hexyl, 3-(N-Ethylamino)-2,4-diethyl-octyl, 2-(N-Butylamino)-ethyl, 2-(N-Butylamino)-propyl, 3-(N-Butylamino)-propyl, 2-(N-Butylamino)-butyl, 4-(N-Butylamino)-butyl, 6-(N-Butylamino)-hexyl, 8-(N-Butylamino)-octyl, 10-(N-Butylamino)-decyl, 12-(N-Butylamino)-dodecyl, 2-(N-Butylamino)-cyclopentyl, 3-(N-Butylamino)-cyclopentyl, 2-(N-Butylamino)-cyclohexyl, 3-(N-Butylamino)-cyclohexyl, 4-(N-Butylamino)-cyclohexyl, 5-(N-Butylamino)-3-oxa-pentyl, 8-(N-Butylamino)-3,6-dioxa-octyl, 7-(N-Butylamino)-4-oxa-heptyl, 3-(N-Butylamino)-2-ethyl-hexyl oder 3-(N-Butylamino)-2,4-diethyl-octyl.

Beispiele für Verbindungen c) sind die Ringöffnungsprodukte, die durch Reaktion von cyclischen Carbonaten mit Ammoniak oder primären Aminen erhältlich sind, oder solche Aminocarbamate, die durch Umsetzung von Alkylenoxiden mit Harnstoffen erhältlich sind, wie z.B. aus US 2 842 523 bekannt.

Weitere Beispiele für Verbindungen c) sind 0-(2-Hydroxyethyl)carbamat, O-(2-Hydroxypropyl)carbamat, 0-(3-Hydroxypropyl)carbamat, O-(4-Hydroxybutyl)carbamat, O-(6-Hydroxyhexyl)carbamat, O-(3-Hydroxy-2-ethyl-hexyl) carbamat, O- (3-Hydroxy-2, 4-diethyl-octyl) carbamat, O-(2,2-Di(hydroxymethyl)butyl)carbamat, O-(2,2-Di(hydroxymethyl)propyl)carbamat, O-(2,2,2-Tri(hydroxymethyl)ethyl)carbamat, O-(2-Hydroxymethyl-2,2-dimethyl-ethyl)carbamat, O- (5-Hydroxy-3-oxa-pentyl)carbamat, O-(8-Hydroxy-3,6-dioxa-octyl)carbamat, O-(7-Hydroxy-4-oxa-heptyl)carbamat, O-(2-Hydroxyethyl)-N-methylcarbamat, O-(2-Hydroxypropyl)-N-methylcarbamat, 0- (3-Hydroxypropyl) -N-methylcarbamat, O-(4-Hydroxybutyl)-N-methylcarbamat, O-(6-Hydroxyhexyl)-N-methylcarbamat, 0-(3-Hydroxy-2-ethyl-hexyl)-N-methylcarbamat, O-(3-Hydroxy-2,4-diethyl-octyl)-N-methylcarbamat, O-(2,2-Di(hydroxymethyl)butyl)-N-methylcarbamat, O- (2,2-Di (hydroxymethyl)propyl)-N-methylcarbamat, O-(2,2,2-Tri(hydroxymethyl)ethyl)-N-methylcarbamat, O- (2-Hydroxymethyl-2,2-dimethyl-ethyl)-N-methylcarbamat, O-(5-Hydroxy-3-oxa-pentyl)-N-methylcarbamat, O-(8-Hydroxy-3,6-dioxa-octyl)-N-methylcarbamat, 0-(7-Hydroxy-4-oxa-heptyl)-N-methylcarbamat, O-(2-Hydroxyethyl)-N-ethylcarbamat, O- (2-Hydroxypropyl)-N-ethylcarbamat, O-(3-Hydroxypropyl)-N-ethylcarbamat, O-(4-Hydroxybutyl)-N-ethylcarbamat, O-(6-Hydroxyhexyl)-N-ethylcarbamat, O-(3-Hydroxy-2-ethyl-hexyl)-N-ethylcarbamat, O-(3-Hydroxy-2,4-diethyl-octyl)-N-ethylcarbamat, O-(2,2-Di(hydroxymethyl)butyl)-N-ethylcarbamat, O-(2,2-Di(hydroxymethyl)propyl)-N-ethylcarbamat, O-(2,2,2-Tri(hydroxymethyl)ethyl)-N-ethylcarbamat, O-(2-Hydroxymethyl-2,2-dimethyl-ethyl)-N-ethylcarbamat, O-(5-Hydroxy-3-oxa-pentyl)-N-ethylcarbamat, O-(8-Hydroxy-3,6-dioxa-octyl)-N-ethylcarbamat, O-(7-Hydroxy-4-oxa-heptyl)-N-ethylcarbamat, O-(2-Hydroxyethyl)-N-butylcarbamat, 0-(2-Hydroxypropyl)-N-butylcarbamat, O-(3-Hydroxypropyl)-N-butylcarbamat, O-(4-Hydroxybutyl)-N-butylcarbamat, O-(6-Hydroxyhexyl)-N-butylcarbamat, O-(3-Hydroxy-2-ethyl-hexyl)-N-butylcarbamat, O-(3-Hydroxy-2,4-diethyl-octyl)-N-butylcarbamat, O-(2,2-Di(hydroxymethyl)butyl)-N-butylcarbamat, O- (2,2-Di (hydroxymethyl)propyl)-N-butylcarbamat, O- (2,2,2-Tri (hydroxymethyl)ethyl)-N-butylcarbamat, O- (2-Hydroxymethyl-2,2-dimethylethyl)-N-butylcarbamat, O-(5-Hydroxy-3-oxa-pentyl)-N-butylcarbamat, O-(8-Hydroxy-3,6-dioxa-octyl)-N-butylcarbamat, O-(7-Hydroxy-4-oxa-heptyl) -N-butylcarbamat, O-(2-(Methylamino)ethyl)carbamat, O-(2-(Methylamino)propyl)carbamat, O-(3-(Methylamino)propyl)carbamat, O-(4-(Methylamino)butyl)carbamat, 0-(6-(Methylamino)hexyl)carbamat, O-(3-(Methylamino)-2-ethyl-hexyl)carbamat, O-(3-(Methylamino)-2,4-diethyl-octyl)carbamat, O-(2,2-Di((Methylamino)methyl)butyl)carbamat, O-(2,2-Di((Methylamino)methyl)propyl)carbamat, O-(2,2,2-Tri((Methylamino)methyl)ethyl)carbamat, O-(2-(Methylamino)methyl-2,2-dimethyl-ethyl)carbamat, O-(5-Methylamino-3-oxa-pentyl)carbamat, O-(8-Methylamino-3,6-dioxa-octyl)carbamat, O-(7-Methylamino-4-oxa-heptyl)carbamat, O-(2-(Methylamino)ethyl)-N-methylcarbamat, O-(2-(Methylamino)propyl)-N-methylcarbamat, O-(3-(Methylamino)propyl)-N-methylcarbamat, O-(4-(Methylamino)butyl)-N-methylcarbamat, O-(6-(Methylamino)hexyl)-N-methylcarbamat, O-(3-Methylamino-2-ethyl-hexyl)-N-methylcarbamat, O-(3-Methylamino-2,4-diethyl-octyl)-N-methylcarbamat, O-(2,2-Di((Methylamino)methyl)butyl)-N-methylcarbamat, O-(2,2-Di((Methylamino)methyl)propyl)-N-methylcarbamat, O-(2,2,2-Tri((Methylamino)methyl)ethyl)-N-methylcarbamat, O-(2-(Methylamino)methyl-2,2-dimethyl-ethyl)-N-methylcarbamat, O-(5-Methylamino-3-oxa-pentyl)-N-methylcarbamat, O-(8-Methylamino-3,6-dioxa-octyl)-N-methylcarbamat, O-(7-Methylamino-4-oxaheptyl)-N-methylcarbamat, O-(2-(Methylamino)ethyl)-N-ethylcarbamat, O- (2- (Methylamino)propyl) -N-ethylcarbamat, 0-(3-(Methylamino)propyl)-N-ethylcarbamat, O-(4-(Methylamino)butyl)-N-ethylcarbamat, 0-(6-(Methylamino)hexyl)-N-ethylcarbamat, 0-(3-Methylamino-2-ethyl-hexyl)-N-ethylcarbamat, O-(3-Methylamino-2,4-diethyl-octyl)-N-ethylcarbamat, O-(2,2-Di((Methylamino)methyl)butyl)-N-ethylcarbamat, O-(2,2-Di((Methylamino)methyl)propyl)-N-ethylcarbamat, O-(2,2,2-Tri((Methylamino)methyl)ethyl)-N-ethylcarbamat, O-(2-(Methylamino)methyl-2,2-dimethyl-ethyl)-N-ethylcarbamat, O-(5-Methylamino-3-oxa-pentyl)-N-ethylcarbamat, O-(8-Methylamino-3,6-dioxa-octyl)-N-ethylcarbamat, O-(7-Methylamino-4-oxa-heptyl)-N-ethylcarbamat, O-(2-(Methylamino)ethyl)-N-butylcarbamat, O-(2-(Methylamino)propyl)-N-butylcarbamat, O-(3-(Methylamino)propyl)-N-butylcarbamat, O-(4-(Methylamino)butyl)-N-butylcarbamat, O-(6-(Methylamino)hexyl)-N-butylcarbamat, O-(3-Methylamino-2-ethyl-hexyl)-N-butylcarbamat, O-(3-Methylamino-2,4-diethyl-octyl)-N-butylcarbamat, O-(2,2-Di((Methylamino)methyl)butyl)-N-butylcarbamat, O- (2, 2-Di((Methylamino) methyl) propyl) -N-butylcarbamat, O-(2,2,2-Tri((Methylamino)methyl)ethyl)-N-butylcarbamat, O-(2-(Methylamino)methyl-2,2-dimethyl-ethyl)-N-butylcarbamat, O-(5-Methylamino-3-oxa-pentyl)-N-butylcarbamat, O-(8-Methylamino-3,6-dioxa-octyl)-N-butylcarbamat, O-(7-Methylamino-4-oxaheptyl)-N-butylcarbamat, O-(2-(Ethylamino)ethyl)carbamat, O-(2-(Ethylamino)propyl)carbamat, O-(3-(Ethylamino)propyl)carbamat, O-(4-(Ethylamino)butyl)carbamat, O- (6- (Ethylamino) hexyl) carbamat, O-(3-Ethylamino-2-ethyl-hexyl)carbamat, O-(3-Ethylamino-2,4-diethyl-octyl)carbamat, O-(2,2-Di((Ethylamino)methy)lbutyl)carbamat, O-(2,2-Di((Ethylamino)methyl)propyl)carbamat, O-(2,2,2-Tri((Ethylamino)methyl)ethyl)carbamat, O-(2-(Ethylamino)methyl-2,2-dimethyl-ethyl) carbamat, O-(5-Ethylamino-3-oxapentyl)carbamat, O-(8-Ethylamino-3,6-dioxa-octyl)carbamat, O-(7-Ethylamino-4-oxa-heptyl)carbamat, O-(2-(Ethylamino)-ethyl)-N-methylcarbamat, O-(2-(Ethylamino)propyl)-N-methylcarbamat, O- (3- (Ethylamino) propyl) -N-methylcarbamat, 0-(4-(Ethylamino)butyl)-N-methylcarbamat, O-(6-(Ethylamino)hexyl)-N-methylcarbamat, O-(3-Ethylamino-2-ethyl-hexyl)-N-methylcarbamat, O-(3-Ethylamino-2,4-diethyl-octyl)-N-methylcarbamat, O-(2,2-Di((Ethylamino)methyl)butyl)-N-methylcarbamat, O-(2,2-Di((Ethylamino)methyl)propyl)-N-methylcarbamat, O-(2,2,2-Tri((Ethylamino)methyl)ethyl)-N-methylcarbamat, O-(2-(Ethylamino)methyl-2,2-dimethyl-ethyl)-N-methylcarbamat, O- (5-Ethylamino-3-oxa-pentyl) -N-methylcarbamat, O-(8-Ethylamino-3,6-dioxa-octyl)-N-methylcarbamat, O-(7-Ethylamino-4-oxaheptyl)-N-methylcarbamat, O-(2-(Ethylamino)ethyl)-N-ethylcarbamat, O-(2-(Ethylamino)propyl)-N-ethylcarbamat, O-(3-(Ethylamino)propyl)-N-ethylcarbamat, 0-(4-(Ethylamino)butyl)-N-ethylcarbamat, O-(6-(Ethylamino)hexyl)-N-ethylcarbamat, O-(3-Ethylamino-2-ethyl-hexyl)-N-ethylcarbamat, 0-(3-Ethylamino-2,4-diethyl-octyl)-N-ethylcarbamat, O-(2,2-Di((Ethylamino)methyl)butyl)-N-ethylcarbamat, O-(2,2-Di((Ethylamino)methyl)propyl)-N-ethylcarbamat, O- (2,2,2-Tri((Ethylamino)methyl)ethyl)-N-ethylcarbamat, O-(2-(Ethylamino)methyl-2,2-dimethyl-ethyl)-N-ethylcarbamat, O- (5-Ethylamino-3-oxa-pentyl)-N-ethylcarbamat, O-(8-Ethylamino-3,6-dioxa-octyl)-N-ethylcarbamat, O- (7-Ethylamino-4-oxa-heptyl)-N-ethylcarbamat, O-(2-(Ethylamino)ethyl)-N-butylcarbamat, O- (2- (Ethylamino)propyl)-N-butylcarbamat, O-(3-(Ethylamino)propyl)-N-butylcarbamat, 0-(4-(Ethylamino)butyl)-N-butylcarbamat, 0-(6-(Ethylamino)hexyl)-N-butylcarbamat, O-(3-Ethylamino-2-ethyl-hexyl)-N-butylcarbamat, O-(3-Ethylamino-2,4-diethyl-octyl)-N-butylcarbamat, O-(2,2-Di((Ethylamino)methyl)butyl)-N-butylcarbamat, O-(2,2-Di((Ethylamino)methyl)propyl)-N-butylcarbamat, O-(2,2,2-Tri((Ethylamino)methyl)ethyl)-N-butylcarbamat, O-(2-(Ethylamino)methyl-2,2-dimethyl-ethyl)-N-butylcarbamat, O-(5-Ethylamino-3-oxa-pentyl)-N-butylcarbamat, O-(8-Ethylamino-3,6-dioxa-octyl)-N-butylcarbamat, 0-(7-Ethylamino-4-oxa-heptyl)-N-butylcarbamat, O-(2-(Butylamino)ethyl)carbamat, O- (2- (Butylamino)propyl)carbamat, O-(3-(Butylamino)propyl)carbamat, O-(4-(Butylamino)butyl)carbamat, O-(6-(Butylamino)hexyl)carbamat, O-(3-Butylamino-2-ethyl-hexyl)carbamat, 0-(3-Butylamino-2,4-diethyl-octyl)carbamat, O-(2,2-Di((Butylamino)methy)lbutyl)carbamat, O- (2, 2-Di ( (Butylamino) methyl) propyl) carbamat, O-(2,2,2-Tri((Butylamino)methyl)ethyl)carbamat, 0-(2-(Butylamino)methyl-2,2-dimethyl-ethyl) carbamat, O-(5-Butylamino-3-oxa-pentyl)carbamat, O-(8-Butylamino-3,6-dioxa-octyl)carbamat, O-(7-Butylamino-4-oxaheptyl) carbamat, O-(2-(Butylamino)ethyl)-N-methylcarbamat, O-(2-(Butylamino)propyl)-N-methylcarbamat, O-(3-(Butylamino)propyl)-N-methylcarbamat, O-(4-(Butylamino)butyl)-N-methylcarbamat, O-(6-(Butylamino)hexyl)-N-methylcarbamat, O-(3-Butylamino-2-ethyl-hexyl)-N-methylcarbamat, 0-(3-Butylamino-2,4-diethyl-octyl)-N-methylcarbamat, O-(2,2-Di((Butylamino)methyl)butyl)-N-methylcarbamat, O-(2,2-Di((Butylamino)methyl)propyl)-N-methylcarbamat, O-(2,2,2-Tri((Butylamino)methyl)ethyl)-N-methylcarbamat, O-(2-(Butylamino)methyl-2,2-dimethyl-ethyl)-N-methylcarbamat, O- (5-Butylamino-3-oxa-pentyl)-N-methylcarbamat, O-(8-Butylamino-3,6-dioxa-octyl) -N-methylcarbamat, O-(7-Butylamino-4-oxaheptyl)-N-methylcarbamat, 0-(2-(Butylamino)ethyl)-N-ethylcarbamat, O-(2-(Butylamino)propyl)-N-ethylcarbamat, O-(3-(Butylamino)propyl)-N-ethylcarbamat, O- (4- (Butylamino)butyl)-N-ethylcarbamat, O-(6-(Butylamino)hexyl)-N-ethylcarbamat, 0-(3-Butylamino-2-ethyl-hexyl)-N-ethylcarbamat, O-(3 -Butylamino-2,4-diethyl-octyl)-N-ethylcarbamat, O-(2,2-Di((Butylamino)methyl)butyl)-N-ethylcarbamat, O-(2,2-Di((Butylamino)methyl)propyl)-N-ethylcarbamat, O-(2,2,2-Tri((Butylamino)methyl)ethyl)-N-ethylcarbamat, 0-(2-(Butylamino)methyl-2,2-dimethyl-ethyl)-N-ethylcarbamat, O-(5-Butylamino-3-oxa-pentyl)-N-ethylcarbamat, O-(8-Butylamino-3,6-dioxa-octyl)-N-ethylcarbamat, O-(7-Butylamino-4-oxa-heptyl)-N-ethylcarbamat, O-(2-(Butylamino)ethyl)-N-butylcarbamat, O-(2-(Butylamino)propyl)-N-butylcarbamat, 0-(3-(Butylamino)propyl)-N-butylcarbamat, O-(4-(Butylamino)butyl)-N-butylcarbamat, O-(6-(Butylamino)hexyl)-N-butylcarbamat, O-(3-Butylamino-2-ethyl-hexyl)-N-butylcarbamat, O-(3-Butylamino-2,4-diethyl-octyl)-N-butylcarbamat, O-(2,2-Di((Butylamino)methyl)butyl)-N-butylcarbamat, O-(2,2-Di((Butylamino)methyl)propyl)-N-butylcarbamat, O-(2,2,2-Tri((Butylamino)methyl)ethyl)-N-butylcarbamat, O- (2- (Butylamino)methyl-2,2-dimethyl-ethyl)-N-butylcarbamat, O-(5-Butylamino-3-oxa-pentyl)-N-butylcarbamat, O-(8-Butylamino-3,6-dioxa-octyl)-N-butylcarbamat, O-(7-Butylamino-4-oxa-heptyl)-N-butylcarbamat, O-(2-Thioethyl)carbamat, O-(2-Thiopropyl)carbamat, O-(3-Thiopropyl)carbamat, O-(4-Thiobutyl)carbamat, O-(6-Thiohexyl)carbamat, O-(2-Thioethyl)-N-methylcarbamat, O-(2-Thiopropyl)-N-methylcarbamat, O-(3-Thiopropyl)-N-methylcarbamat, O-(4-Thiobutyl)-N-methylcarbamat, O-(6-Thiohexyl)-N-methylcarbamat, O-(2-Thioethyl)-N-ethylcarbamat, O-(2-Thiopropyl)-N-ethylcarbamat, O- (3-Thiopropyl)-N-ethylcarbamat, O-(4-Thiobutyl)-N-ethylcarbamat, O-(6-Thiohexyl)-N-ethylcarbamat, O-(2-Thioethyl)-N-butylcarbamat, O-(2-Thiopropyl)-N-butylcarbamat, O-(3-Thiopropyl)-N-butylcarbamat, 0-(4-Thiobutyl)-N-butylcarbamat, O-(6-Thiohexyl)-N-butylcarbamat, N- (2-Hydroxyethyl)harnstoff, N-(2-Hydroxypropyl)harnstoff, N-(3-Hydroxypropyl) harnstoff. N-(4-Hydroxybutyl)harnstoff, N- (6-Hydroxyhexyl)harnstoff, N-(3-Hydroxy-2-ethyl-hexyl)harnstoff, N-(3-Hydroxy-2,4-diethyl-octyl)harnstoff, N-(2,2-Di(hydroxymethy)lbutyl)harnstoff, N-(2,2-Di(hydroxymethyl)propyl)harnstoff, N-(2,2,2-Tri(hydroxymethyl)ethyl)harnstoff, N-(2-Hydroxymethyl-2,2-dimethyl-ethyl)harnstoff, N-(5-Hydroxy-3-oxa-pentyl)harnstoff, N-(8-Hydroxy-3,6-dioxa-octyl)harnstoff, N-(7-Hydroxy-4-oxa-heptyl)harnstoff, N-(3-Amino-3,5,5-trimethylcyclohexyl)harnstoff, N-(3-Hydroxy-3,5,5-trimethylcyclohexyl)harnstoff, N-(2-Hydroxyethyl)-N'-methylharnstoff, N-(2-Hydroxypropyl)-N'-methylharnstoff, N-(3-Hydroxypropyl)-N'-methylharnstoff, N-(4-Hydroxybutyl)-N'-methylharnstoff, N-(6-Hydroxyhexyl)-N'-methylharnstoff, N-(3-Hydroxy-2-ethyl-hexyl)-N'-methylharnstoff, N-(3-Hydroxy-2,4-diethyl-octyl)-N'-methylharnstoff, N-(2,2-Di(hydroxymethy)lbutyl)-N'-methylharnstoff, N-(2,2-Di(hydroxymethyl)propyl)-N'-methylharnstoff, N-(2,2,2-Tri(hydroxymethyl)ethyl)-N'-methylharnstoff, N-(2-Hydroxymethyl-2,2-dimethyl-ethyl)-N'-methylharnstoff, N-(5-Hydroxy-3-oxa-pentyl)-N'-methylharnstoff, N-(8-Hydroxy-3,6-dioxa-octyl)-N'-methylharnstoff, N-(7-Hydroxy-4-oxa-heptyl)-N'-methylharnstoff, N-(3-Amino-3,5,5-trimethylcyclohexyl)-N'-methylharnstoff, N-(3-Hydroxy-3,5,5-trimethyl-cyclohexyl)-N'-methylharnstoff, N-(2-Hydroxyethyl)-N'-ethylharnstoff, N-(2-Hydroxypropyl)-N'-ethylharnstoff, N-(3-Hydroxypropyl)-N'-ethylharnstoff, N-(4-Hydroxybutyl)-N'-ethylharnstoff, N-(6-Hydroxyhexyl)-N'-ethylharnstoff, N-(3-Hydroxy-2-ethyl-hexyl)-N'-ethylharnstoff, N-(3-Hydroxy-2,4-diethyl-octyl)-N'-ethylharnstoff, N-(2,2-Di(hydroxymethy)lbutyl)-N'-ethylharnstoff, N-(2,2-Di(hydroxymethyl)propyl)-N'-ethylharnstoff, N-(2,2,2-Tri(hydroxymethyl)ethyl)-N'-ethylharnstoff, N-(2-Hydroxymethyl-2,2-dimethyl-ethyl)-N'-ethylharnstoff, N-(5-Hydroxy-3-oxa-pentyl)-N'-ethylharnstoff, N-(8-Hydroxy-3,6-dioxa-octyl)-N'-ethylharnstoff, N-(7-Hydroxy-4-oxa-heptyl)-N'-ethylharnstoff, N-(3-Amino-3,5,5-trimethylcyclohexyl)-N'-ethylharnstoff, N-(3-Hydroxy-3,5,5-trimethylcyclohexyl)-N'-ethylharnstoff, N-(2-Hydroxyethyl)-N'-butylharnstoff, N-(2-Hydroxypropyl)-N'-butylharnstoff, N-(3-Hydroxypropyl)-N'-butylharnstoff, N-(4-Hydroxybutyl)-N'-butylharnstoff, N-(6-Hydroxyhexyl)-N'-butylharnstoff, N-(3-Hydroxy-2-ethyl-hexyl)-N'-butylharnstoff, N-(3-Hydroxy-2,4-diethyl-octyl)-N'-butylharnstoff, N-(2,2-Di(hydroxymethy)lbutyl)-N'-butylharnstoff, N-(2,2-Di(hydroxymethyl)propyl)-N'-butylharnstoff, N-(2,2,2-Tri(hydroxymethyl)ethyl)-N'-butylharnstoff, N-(2-Hydroxymethyl-2,2-dimethyl-ethyl)-N'-butyl-harnstoff, N-(5-Hydroxy-3-oxa-pentyl)-N'-butylharnstoff, N-(8-Hydroxy-3,6-dioxa-octyl)-N'-butylharnstoff, N-(7-Hydroxy-4-oxa-heptyl)-N'-butylharnstoff, N-(3-Amino-3,5,5-trimethylcyclohexyl)-N'-butylharnstoff, N-(3-Hydroxy-3,5,5-trimethylcyclohexyl)-N'-butyl-harnstoff, N-(2-(methylamino)ethyl)harnstoff, N-(2-(Methylamino)propyl)harnstoff, N-(3-(Methylamino)propyl)harnstoff, N-(4-(Methylamino)butyl)harnstoff, N-(6-(Methylamino)hexyl)harnstoff, N-(3-Methylamino-2-ethyl-hexyl)harnstoff, N-(3-Methylamino-2,4-diethyl-octyl)harnstoff, N-(2,2-Di((Methylamino)methy)lbutyl)harnstoff, N-(2,2-Di((Methylamino)methyl)propyl)harnstoff, N-(2,2,2-Tri((Methylamino)methyl)ethyl)harnstoff, N-(2-(Methylamino)methyl-2,2-dimethyl-ethyl)harnstoff, N-(5-Methylamino-3-oxa-pentyl)harnstoff, N-(8-Methylamino-3,6-dioxa-octyl) harnstoff, N-(7-Methylamino-4-oxa-heptyl)harnstoff, N-(2-(Methylamino)ethyl)-N'-methylharnstoff, N-(2-(Methylamino)propyl)-N'-methylharnstoff, N-(3-(Methylamino)propyl)-N'-methylharnstoff, N-(4-(Methylamino)butyl)-N'-methylharnstoff, N-(6-(Methylamino)hexyl)-N'-methylharnstoff, N-(3-Methylamino-2-ethyl-hexyl)-N'-methylharnstoff, N-(3-Methylamino-2,4-diethyl-octyl)-N'-methylharnstoff, N-(2,2-Di((Methylamino)methy)lbutyl)-N'-methyl-harnstoff, N-(2,2-Di((Methylamino)methyl)propyl)-N'-methylharnstoff, N-(2,2,2-Tri((Methylamino)methyl)ethyl)-N'-methylharnstoff, N-(2-(Methylamino)methyl-2,2-dimethyl-ethyl)-N'-methylharnstoff, N-(5-Methylamino-3-oxa-pentyl)-N'-methylharnstoff, N-(8-Methylamino-3,6-dioxa-octyl)-N'-methylharnstoff, N-(7-Methylamino-4-oxa-heptyl)-N'-methylharnstoff, N-(2-(Methylamino)ethyl)-N'-ethylharnstoff, N-(2-(Methylamino)propyl)-N'-ethylharnstoff, N-(3-(Methylamino)propyl)-N'-ethylharnstoff, N-(4-(Methylamino)butyl)-N'-ethylharnstoff, N-(6-(Methylamino)hexyl)-N'-ethylharnstoff, N-(3-Methylamino-2-ethyl-hexyl)-N'-ethylharnstoff, N- (3-Methylamino-2, 4-diethyl-octyl) -N' -ethylharnstoff, N-(2,2-Di((Methylamino)methy)lbutyl)-N'-ethylharnstoff, N-(2,2-Di((Methylamino)methyl)propyl)-N'-ethylharnstoff, N-(2,2,2-Tri((Methylamino)methyl)ethyl)-N'-ethylharnstoff, N-(2-(Methylamino)methyl-2,2-dimethyl-ethyl)-N'-ethylharnstoff, N-(5-Methylamino-3-oxa-pentyl)-N'-ethylharnstoff, N-(8-Methylamino-3,6-dioxa-octyl)-N'-ethylharnstoff, N-(7-Methylamino-4-oxa-heptyl)-N'-ethylharnstoff, N-(2-(Methylamino)ethyl)-N'-butylharnstoff, N-(2-(Methylamino)propyl)-N'-butylharnstoff, N-(3-(Methylamino)propyl)-N'-butylharnstoff, N-(4-(Methylamino)butyl)-N'-butylharnstoff, N-(6-(Methylamino)hexyl)-N'-butylharnstoff, N-(3-Methylamino-2-ethyl-hexyl)-N'-butylharnstoff, N-(3-Methylamino-2,4-diethyl-octyl)-N'-butylharnstoff, N-(2,2-Di((Methylamino)methy)lbutyl)-N'-butylharnstoff, N-(2,2-Di((Methylamino)methyl)propyl)-N'-butylharnstoff, N-(2,2,2-Tri((Methylamino)methyl)ethyl)-N'-butylharnstoff, N-(2-(Methylamino)methyl-2,2-dimethyl-ethyl)-N'-butylharnstoff, N-(5-Methylamino-3-oxa-pentyl)-N'-butylharnstoff, N-(8-Methylamino-3,6-dioxa-octyl)-N'-butylharnstoff, N-(7-Methylamino-4-oxa-heptyl)-N'-butylharnstoff, N-(2-(Ethylamino)ethyl)harnstoff, N-(2-(Ethylamino)propyl)harnstoff, N-(3-(Ethylamino)propyl)harnstoff, N-(4-(Ethylamino)butyl)harnstoff, N-(6-(Ethylamino)hexyl)harnstoff, N-(3-Ethylamino-2-ethyl-hexyl)harnstoff, N-(3-Ethylamino-2,4-diethyl-octyl)harnstoff, N-(2,2-Di((Ethylamino)methy)lbutyl)harnstoff, N-(2,2-Di((Ethylamino)methyl)propyl) harnstoff, N-(2,2,2-Tri((Ethylamino)methyl)ethyl)harnstoff, N- (2- (Ethylamino)methyl-2,2-dimethyl-ethyl)harnstoff, N-(5-Ethylamino-3-oxapentyl)harnstoff, N-(8-Ethylamino-3,6-dioxa-octyl)harnstoff, N-(7-Ethylamino-4-oxa-heptyl)harnstoff, N- (2- (Ethylamino) - ethyl)-N'-methylharnstoff, N-(2-(Ethylamino)propyl)-N'-methylharnstoff, N-(3-(Ethylamino)propyl)-N'-methylharnstoff, N-(4-(Ethylamino)butyl)-N'-methylharnstoff, N-(6-(Ethylamino)hexyl)-N'-methylharnstoff, N-(3-Ethylamino-2-ethyl-hexyl)-N'-methylharnstoff, N-(3-Ethylamino-2,4-diethyl-octyl)-N'-methylharnstoff, N-(2,2-Di((Ethylamino)methy)lbutyl)-N'-methylharnstoff, N-(2,2-Di((Ethylamino)methyl)propyl)-N'-methylharnstoff, N-(2,2,2-Tri((Ethylamino)methyl)ethyl)-N'-methylharnstoff, N-(2-(Ethylamino)methyl-2,2-dimethyl-ethyl)-N'-methylharnstoff, N-(5-Ethylamino-3-oxa-pentyl)-N'-methylharnstoff, N-(8-Ethylamino-3,6-dioxa-octyl)-N'-methylharnstoff, N-(7-Ethylamino-4-oxa-heptyl)-N'-methylharnstoff, N-(2-(Ethylamino)ethyl)-N'-ethylharnstoff, N-(2-(Ethylamino)propyl)-N'-ethylharnstoff, N-(3-(Ethylamino)propyl)-N'-ethylharnstoff, N-(4-(Ethylamino)butyl)-N'-ethylharnstoff, N-(6-(Ethylamino)hexyl)-N'-ethylharnstoff, N-(3-Ethylamino-2-ethyl-hexyl)-N'-ethylharnstoff, N-(3-Ethylamino-2,4-diethyl-octyl)-N'-ethylharnstoff, N-(2,2-Di((Ethylamino)methy)lbutyl)-N'-ethylharnstoff, N-(2,2-Di((Ethylamino)methyl)propyl)-N'-ethylharnstoff, N-(2,2,2-Tri((Ethylamino)methyl)ethyl)-N'-ethylharnstoff, N-(2-(Ethylamino)methyl-2,2-dimethyl-ethyl)-N'-ethylharnstoff, N-(5-Ethylamino-3-oxa-pentyl)-N'-ethylharnstoff, N-(8-Ethylamino-3,6-dioxa-octyl)-N'-ethylharnstoff, N-(7-Ethylamino-4-oxa-heptyl)-N'-ethylharnstoff, N-(2-(Ethylamino)ethyl)-N'-butylharnstoff, N-(2-(Ethylamino)propyl)-N'-butylharnstoff, N-(3-(Ethylamino)propyl)-N'-butylharnstoff, N-(4-(Ethylamino)butyl)-N'-butylharnstoff, N-(6-(Ethylamino)hexyl)-N'-butylharnstoff, N-(3-Ethylamino-2-ethyl-hexyl)-N'-butylharnstoff, N-(3-Ethylamino-2,4-diethyl-octyl)-N'-butylharnstoff, N-(2,2-Di((Ethylamino)methy)lbutyl)-N'-butylharnstoff, N-(2,2-Di((Ethylamino)methyl)propyl)-N'-butylharnstoff, N-(2,2,2-Tri((Ethylamino)methyl)ethyl)-N'-butylharnstoff, N-(2-(Ethylamino)methyl-2,2-dimethyl-ethyl)-N'-butylharnstoff, N-(5-Ethylamino-3-oxa-pentyl)-N'-butylharnstoff, N-(8-Ethylamino-3,6-dioxa-octyl)-N'-butylharnstoff, N-(7-Ethylamino-4-oxa-heptyl)-N'-butylharnstoff, N-(2-(Butylamino)ethyl)harnstoff, N-(2-(Butylamino)propyl)harnstoff, N-(3-(Butylamino)propyl)harnstoff, N-(4-(Butylamino)butyl)harnstoff, N-(6-(Butylamino)hexyl)harnstoff, N- (3-Butylamino-2-ethyl-hexyl)harnstoff, N-(3-Butylamino-2,4-diethyl-octyl)harnstoff, N-(2,2-Di((Butylamino)methy)lbutyl)harnstoff, N-(2,2-Di((Butylamino)methyl)propyl)harnstoff, N- (2,2,2-Tri((Butylamino)methyl)ethyl)harnstoff, N-(2-(Butylamino)methyl-2,2-dimethyl-ethyl)harnstoff, N-(5-Butylamino-3-oxa-pentyl)harnstoff, N-(8-Butylamino-3,6-dioxa-octyl)harnstoff, N-(7-Butylamino-4-oxa-heptyl)harnstoff, N-(2-(Butylamino)ethyl)-N'-methylharnstoff, N-(2-(Butylamino)propyl)-N'-methylharnstoff, N-(3-(Butylamino)propyl)-N'-methylharnstoff, N- (4- (Butylamino)butyl)-N' -methylharnstoff, N-(6-(Butylamino)hexyl)-N'-methylharnstoff, N-(3-Butylamino-2-ethyl-hexyl)-N'-methylharnstoff, N-(3-Butylamino-2,4-diethyl-octyl)-N'-methylharnstoff, N-(2,2-Di((Butylamino)methy)lbutyl)-N'-methylharnstoff, N-(2,2-Di((Butylamino)methyl)propyl)-N'-methylharnstoff, N-(2,2,2-Tri((Butylamino)methyl)ethyl)-N'-methylharnstoff, N-(2-(Butylamino)methyl-2,2-dimethyl-ethyl)-N'-methylharnstoff, N-(5-Butylamino-3-oxa-pentyl)-N'-methylharnstoff, N-(8-Butylamino-3,6-dioxa-octyl)-N'-methylharnstoff, N-(7-Butylamino-4-oxa-heptyl)-N'-methylharnstoff, N-(2-(Butylamino)ethyl)-N'-ethylharnstoff, N-(2-(Butylamino)propyl)-N'-ethylharnstoff, N-(3-(Butylamino)propyl)-N'-ethylharnstoff, N-(4-(Butylamino)butyl)-N'-ethylharnstoff, N-(6-(Butylamino)hexyl)-N'-ethylharnstoff, N-(3-Butylamino-2-ethyl-hexyl)-N'-ethylharnstoff, N-(3-Butylamino-2,4-diethyl-octyl) -N' -ethylharnstoff, N-(2,2-Di((Butylamino)methy)lbutyl)-N'-ethylharnstoff, N-(2,2-Di((Butylamino)methyl)propyl)-N'-ethylharnstoff, N-(2,2,2-Tri((Butylamino)methyl)ethyl)-N'-ethylharnstoff, N-(2-(Butylamino)methyl-2,2-dimethyl-ethyl)-N'-ethylharnstoff, N-(5-Butylamino-3-oxa-pentyl)-N'-ethylharnstoff, N- (8-Butylamino-3, 6-dioxa-octyl) -N' -ethylharnstoff, N-(7-Butylamino-4-oxa-heptyl)-N'-ethylharnstoff, N-(2-(Butylamino)ethyl)-N'-butylharnstoff, N-(2-(Butylamino)propyl)-N'-butylharnstoff, N-(3-(Butylamino)propyl)-N'-butylharnstoff, N-(4-(Butylamino)butyl)-N'-butylharnstoff, N-(6-(Butylamino)hexyl)-N'-butylharnstoff, N-(3-Butylamino-2-ethyl-hexyl)-N'-butyl-harnstoff, N- (3-Butylamino-2,4-diethyl-octyl) -N'-butylharnstoff, N-(2,2-Di((Butylamino)methy)lbutyl)-N'-butylharnstoff, N-(2,2-Di((Butylamino)methyl)propyl)-N'-butylharnstoff, N-(2,2,2-Tri((Butylamino)methyl)ethyl)-N'-butylharnstoff, N-(2-(Butylamino)methyl-2,2-dimethyl-ethyl)-N'-butylharnstoff, N-(5-Butylamino-3-oxa-pentyl)-N'-butylharnstoff, N-(8-Butylamino-3,6-dioxa-octyl)-N'-butylharnstoff, N-(7-Butylamino-4-oxa-heptyl)-N'-butylharnstoff, N-(2-Thioethyl)harnstoff, N-(2-Thiopropyl)harnstoff, N-(3-Thiopropyl)harnstoff, N-(4-Thiobutyl)harnstoff, N-(6-Thiohexyl)harnstoff, N-(2-Thioethyl)-N'-methylharnstoff, N-(2-Thiopropyl)-N'-methylharnstoff, N-(3-Thiopropyl)-N'-methylharnstoff, N-(4-Thiobutyl)-N'-methylharnstoff, N-(6-Thiohexyl)-N'-methylharnstoff, N-(2-Thioethyl)-N'-ethylharnstoff, N-(2-Thiopropyl)-N'-ethylharnstoff, N-(3-Thiopropyl)-N'-ethylharnstoff, N-(4-Thiobutyl)-N'-ethylharnstoff, N-(6-Thiohexyl)-N'-ethylharnstoff, N-(2-Thioethyl)-N'-butylharnstoff, N-(2-Thiopropyl)-N'-butylharnstoff, N-(3-Thiopropyl)-N'-butylharnstoff, N-(4-Thiobutyl)-N'-butylharnstoff, N-(6-Thiohexyl)-N'-butylharnstoff, N-(2-Hydroxyethyl)-N,N'-ethylenharnstoff, N-(2-Hydroxypropyl)-N,N'-ethylenharnstoff, N-(3-Hydroxypropyl)-N,N'-ethylenharnstoff, N-(4-Hydroxybutyl)-N,N'-ethylenharnstoff, N-(6-Hydroxyhexyl)-N,N'-ethylenharnstoff, N-(3-Hydroxy-2-ethyl-hexyl)-N,N'-ethylenharnstoff, N-(3-Hydroxy-2,4-diethyl-octyl)-N,N'-ethylenharnstoff, N-(2,2-Di(hydroxymethy)lbutyl)-N,N'-ethylenharnstoff, N-(2,2-Di(hydroxymethyl)propyl)-N,N'-ethylenharnstoff, N-(2,2,2-Tri(hydroxymethyl)ethyl)-N,N'-ethylenharnstoff, N-(2-Hydroxymethyl-2,2-dimethyl-ethyl)-N,N'-ethylenharnstoff, N-(5-Hydroxy-3-oxa-pentyl)-N,N'-ethylenharnstoff, N-(8-Hydroxy-3,6-dioxa-octyl)-N,N'-ethylenharnstoff, N-(7-Hydroxy-4-oxa-heptyl)-N,N'-ethylenharnstoff, N-(2-(Methylamino)ethyl)-N,N'-ethylenharnstoff, N-(2-(Methylamino)propyl)-N,N'-ethylenharnstoff, N-(3-(Methylamino)propyl)-N,N'-ethylenharnstoff, N-(4-(Methylamino)butyl)-N,N'-ethylenharnstoff, N-(6-(Methylamino)hexyl)-N,N'-ethylenharnstoff, N-(3-Methylamino-2-ethyl-hexyl)-N,N'-ethylenharnstoff, N-(3-Methylamino-2,4-diethyl-octyl)-N,N'-ethylenharnstoff, N-(2,2-Di((Methylamino)methy)lbutyl)-N,N'-ethylenharnstoff, N-(2,2-Di((Methylamino)methyl)propyl)-N,N'-ethylenharnstoff, N-(2,2,2-Tri((Methylamino)methyl)ethyl)-N,N'-ethylenharnstoff, N-(2-(Methylamino)methyl-2,2-dimethyl-ethyl)-N,N'-ethylenharnstoff, N-(5-Methylamino-3-oxa-pentyl)-N,N'-ethylenharnstoff, N-(8-Methylamino-3,6-dioxa-octyl)-N,N'-ethylenharnstoff, N-(7-Methylamino-4-oxa-heptyl)-N,N'-ethylenharnstoff, N-(3-Amino-3, 5,5-trimethylcyclohexyl)-N,N'-ethylenharnstoff, N-(3-Hydroxy-3,5,5-trimethylcyclohexyl)-N,N'-ethylenharnstoff, N-(2-(Ethylamino)ethyl)-N,N'-ethylenharnstoff, N-(2-(Ethylamino)propyl)-N,N'-ethylenharnstoff, N-(3-(Ethylamino)propyl)-N,N'-ethylenharnstoff, N-(4-(Ethylamino)butyl)-N,N'-ethylenharnstoff, N-(6-(Ethylamino)hexyl)-N,N'-ethylenharnstoff, N-(3-Ethylamino-2-ethyl-hexyl)-N,N'-ethylenharnstoff, N-(3-Ethylamino-2,4-diethyl-octyl)-N,N'-ethylenharnstoff, N-(2,2-Di((Ethylamino)methy)lbutyl)-N,N'-ethylenharnstoff, N-(2,2-Di((Ethylamino)methyl)propyl)-N,N'-ethylenharnstoff, N-(2,2,2-Tri((Ethylamino)methyl)ethyl)-N,N'-ethylenharnstoff, N-(2-(Ethylamino)methyl-2,2-dimethyl-ethyl)-N,N'-ethylenharnstoff, N-(5-Ethylamino-3-oxa-pentyl)-N,N'-ethylenharnstoff, N-(8-Ethylamino-3,6-dioxa-octyl)-N,N'-ethylenharnstoff, N-(7-Ethylamino-4-oxa-heptyl)-N,N'-ethylenharnstoff, N-(2-(Butylamino)ethyl)-N,N'-ethylenharnstoff, N-(2-(Butylamino)propyl)-N,N'-ethylenharnstoff, N-(3-(Butylamino)propyl)-N,N'-ethylenharnstoff, N-(4-(Butylamino)butyl)-N,N'-ethylenharnstoff, N-(6-(Butylamino)hexyl)-N,N'-ethylenharnstoff, N-(3-Butylamino-2-ethyl-hexyl)-N,N'-ethylenharnstoff, N-(3-Butylamino-2,4-diethyl-octyl)-N,N'-ethylenharnstoff, N-(2,2-Di((Butylamino)methy)lbutyl)-N,N'-ethylenharnstoff, N-(2,2-Di((Butylamino)methyl)propyl)-N,N'-ethylenharnstoff, N-(2,2,2-Tri((Butylamino)methyl)ethyl)-N,N'-ethylenharnstoff, N-(2-(Butylamino)methyl-2,2-dimethyl-ethyl)-N,N'-ethylenharnstoff, N-(5-Butylamino-3-oxa-pentyl)-N,N'-ethylenharnstoff, N-(8-Butylamino-3,6-dioxa-octyl)-N,N'-ethylenharnstoff, N-(7-Butylamino-4-oxa-heptyl)-N,N'-ethylenharnstoff, N-(2-Thioethyl)-N,N'-ethylenharnstoff, N-(2-Thiopropyl)-N,N'-ethylenharnstoff, N-(3-Thiopropyl)-N,N'-ethylenharnstoff, N-(4-Thiobutyl)-N,N'-ethylenharnstoff, N-(6-Thiohexyl)-N,N'-ethylenharnstoff, N-(2-Hydroxyethyl)-N,N'-propylenharnstoff, N-(2-Hydroxypropyl)-N,N'-propylenharnstoff, N-(3-Hydroxypropyl)-N,N'-propylenharnstoff, N-(4-Hydroxybutyl)-N,N'-propylenharnstoff, N-(6-Hydroxyhexyl)-N,N'-propylenharnstoff, N-(3-Hydroxy-2-ethyl-hexyl)-N,N'-propylenharnstoff, N-(3-Hydroxy-2,4-diethyl-octyl)-N.N'-propylenharnstoff, N-(2,2-Di(hydroxymethy)lbutyl)-N,N'-propylenharnstoff, N-(2,2-Di(hydroxymethyl)propyl)-N,N'-propylenharnstoff, N-(2,2,2-Tri(hydroxymethyl)ethyl)-N,N'-propylenharnstoff, N-(2-Hydroxymethyl-2,2-dimethyl-ethyl)-N,N'-propylenharnstoff, N-(5-Hydroxy-3-oxa-pentyl)-N,N'-propylenharnstoff, N-(8-Hydroxy-3,6-dioxa-octyl)-N,N'-propylenharnstoff, N-(7-Hydroxy-4-oxa-heptyl)-N,N'-propylenharnstoff, N-(3-Amino-3,5,5-tri-methylcyclohexyl)-N,N'-propylenharnstoff, N-(3-Hydroxy-3,5,5-tri-methylcyclohexyl)-N,N'-propylenharnstoff, N-(2-(Methylamino)ethyl)-N,N'-propylenharnstoff, N-(2-(Methylamino)propyl)-N,N'-propylenharnstoff, N-(3-(Methylamino)propyl)-N,N'-propylenharnstoff, N-(4-(Methylamino)butyl)-N,N'-propylenharnstoff, N-(6-(Methylamino)hexyl)-N,N'-propylenharnstoff, N-(3-Methylamino-2-ethyl-hexyl)-N,N'-propylenharnstoff, N-(3-Methylamino-2,4-diethyl-octyl)-N,N'-propylenharnstoff, N-(2,2-Di((Methylamino)methy)lbutyl)-N,N'-propylenharnstoff, N-(2,2-Di((Methylamino)methyl)propyl)-N,N'-propylenharnstoff, N-(2,2,2-Tri((Methylamino)methyl)ethyl)-N,N'-propylenharnstoff, N-(2-(Methylamino)methyl-2,2-dimethyl-ethyl)-N,N'-propylenharnstoff, N-(5-Methylamino-3-oxa-pentyl)-N,N'-propylenharnstoff, N-(8-Methylamino-3,6-dioxa-octyl)-N,N'-propylenharnstoff, N-(7-Methylamino-4-oxa-heptyl)-N,N'-propylenharnstoff, N-(2-(Ethylamino)ethyl)-N,N'-propylenharnstoff, N-(2-(Ethylamino)propyl)-N,N'-propylenharnstoff, N-(3-(Ethylamino)propyl)-N,N'-propylenharnstoff, N-(4-(Ethylamino)butyl)-N,N'-propylenharnstoff, N-(6-(Ethylamino)hexyl)-N,N'-propylenharnstoff, N-(3-Ethylamino-2-ethyl-hexyl)-N,N'-propylenharnstoff, N-(3-Ethylamino-2,4-diethyl-octyl)-N,N'-propylenharnstoff, N-(2,2-Di((Ethylamino)methy)lbutyl)-N,N'-propylenharnstoff, N-(2,2-Di((Ethylamino)methyl)propyl)-N,N'-propylenharnstoff, N-(2,2,2-Tri((Ethylamino)methyl)ethyl)-N,N'-propylenharnstoff, N-(2-(Ethylamino)methyl-2,2-dimethyl-ethyl)-N,N'-propylenharnstoff, N-(5-Ethylamino-3-oxa-pentyl)-N,N'-propylenharnstoff, N-(8-Ethylamino-3,6-dioxa-octyl)-N,N'-propylenharnstoff, N-(7-Ethylamino-4-oxa-heptyl)-N,N'-propylenharnstoff, N-(2-(Butylamino)ethyl)-N,N'-propylenharnstoff, N-(2-(Butylamino)propyl)-N,N'-propylenharnstoff, N-(3-(Butylamino)propyl)-N,N'-propylenharnstoff, N-(4-(Butylamino)butyl)-N,N'-propylenharnstoff, N- (6- (Butylamino) hexyl) -N,N' -propylenharnstoff, N-(3-Butylamino-2-ethyl-hexyl)-N,N'-propylenharnstoff, N-(3-Butylamino-2,4-diethyl-octyl)-N,N'-propylenharnstoff, N-(2,2-Di((Butylamino)methy)lbutyl)-N,N'-propylenharnstoff, N- (2,2-Di ((Butylamino)methyl)propyl)-N,N'-propylenharnstoff, N- (2,2,2-Tri ((Butylamino)methyl)ethyl)-N,N'-propylenharnstoff, N-(2-(Butylamino)methyl-2,2-dimethyl-ethyl)-N,N'-propylenharnstoff, N-(5-Butylamino-3-oxa-pentyl)-N,N'-propylenharnstoff, N-(8-Butylamino-3,6-dioxa-octyl)-N,N'-propylenharnstoff, N-(7-Butylamino-4-oxa-heptyl)-N,N'-propylenharnstoff, N-(2-Thioethyl)-N,N'-propylenharnstoff, N- (2-Thiopropyl)-N,N' -propylenharnstoff, N-(3-Thiopropyl)-N,N'-propylenharnstoff, N-(4-Thiobutyl)-N,N'-propylenharnstoff oder N-(6-Thiohexyl)-N,N'-propylenharnstoff.

"Propylenharnstoff" kann dabei sowohl für "1,2-Propylenharnstoff" als auch für "1,3-Propylenharnstoff" stehen.

Bevorzugt handelt es sich bei den Verbindungen c) um O-(2-Hydroxyethyl)carbamat, O-(2-Hydroxypropyl)carbamat, O-(3-Hydroxypropyl)carbamat, O-(4-Hydroxybutyl)carbamat, O-(6-Hydroxyhexyl)carbamat, O-(2,2-Di(hydroxymethyl)propyl)carbamat, O-(2-Hydroxyethyl)-N-methylcarbamat, O-(2-Hydroxypropyl)-N-methylcarbamat, O-(2-Hydroxyethyl)-N-ethylcarbamat, N-(2-Hydroxyethyl)harnstoff, N-(2-Hydroxypropyl)harnstoff, N-(3-Hydroxypropyl)harnstoff, N-(4-Hydroxybutyl)harnstoff, N-(6-Hydroxyhexyl)harnstoff, N-(2-Hydroxyethyl)-N'-methylharnstoff, N-(2-Hydroxypropyl)-N'-methylharnstoff, N-(3-Hydroxypropyl)-N'-methylharnstoff, N-(4-Hydroxybutyl)-N'-methylharnstoff oder N-(6-Hydroxyhexyl)-N'-methylharnstoff und besonders bevorzugt um 0-(2-Hydroxyethyl)carbamat, O-(2-Hydroxypropyl)carbamat oder O-(4-Hydroxybutyl)carbamat.

Als Komponente d) kommen Verbindungen mit mindestens einer gegenüber Isocyanat reaktiven Gruppe und mindestens einer dispergieraktiven Gruppe in Betracht.

Solche Verbindungen werden beispielsweise durch die allgemeine Formel

RG-R³-DG

dargestellt, worin
RG mindestens eine gegen Isocyanat reaktive Gruppe bedeutet, DG mindestens eine dispergieraktive Gruppe und
R³ einen 1 bis 20 Kohlenstoffatome enthaltenden aliphatischen, cycloaliphatischen oder aromatischen Rest.

Beispiele für RG sind -OH, -SH, -NH₂ oder -NHR⁴, worin R⁴ die oben angeführte Bedeutung hat, jedoch von dem dort verwendeten Rest verschieden sein kann.

Beispiele für DG sind -COOH, -SO₃H oder -PO₃H sowie deren anionischen Formen, denen ein beliebiges Gegenion assoziiert sein kann, z.B. Li⁺, Na⁺, K⁺, Cs⁺, Mg²⁺, Ca²⁺, Ba²⁺, Ammonium, Methylammonium, Dimethylammonium, Trimethylammonium, Ethylammonium, Diethylammonium, Triethylammonium, Tributylammonium, Di-iso-Propyl-ethyl-ammonium, Benzyldimethylammonium, Monoethanolammonium, Diethanolammonium, Triethanolammonium, Hydroxyethyl-Dimethylammonium, Hydroxyethyl-Diethylammonium, Monopropanolammonium, Dipropanolammonium, Tripropanolammonium, Piperidinium, Piperazinium, N,N'-Dimethylpiperazinium, Morpholinium oder Pyridinium.

R³ kann z.B. Methylen, 1,2-Ethylen, 1,2-Propylen, 1,3-Propylen, 1,2-Butylen, 1,4-Butylen, 1,3-Butylen, 1,6-Hexylen, 1,8-Octylen, 1,12-Dodecylen, 1,2-Phenylen, 1,3-Phenylen, 1,4-Phenylen, 1,2-Naphthylen, 1,3-Naphthylen, 1,4-Naphthylen, 1,6-Naphthylen, 1,2-Cyclopentylen, 1,3-Cyclopentylen, 1,2-Cyclohexylen, 1,3-Cyclohexylen oder 1,4-Cyclohexylen sein.

Bevorzugt handelt es sich bei der Komponente d) z.B. um Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxyessigsäure, Hydroxypivalinsäure, Milchsäure, Hydroxybernsteinsäure, Hydroxydecansäure, Dimethylolpropionsäure, Dimethylolbuttersäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure sowie deren Alkali- Erdalkali- oder Ammoniumsalze und besonders bevorzugt um die genannten Monohydroxycarbon-und -sulfonsäuren sowie Monoaminocarbon- und -sulfonsäuren.

Zur Herstellung der Dispersion werden die vorgenannten Säuren, falls es sich nicht schon um Salze handelt, teilweise oder vollständig neutralisiert, bevorzugt mit Alkalisalzen oder Aminen, bevorzugt tertiären Aminen.

Als Komponente e) kommen Verbindungen in Betracht, die mindestens zwei gegenüber Isocyanat reaktive Gruppen, beispielsweise -OH, -SH, -NH₂ oder -NHR⁵, worin R⁵ die gleiche Bedeutung aufweist, wie R⁴ oben, jedoch von R⁴ verschieden sein kann, aufweisen.

Dies sind bevorzugt Diole oder Polyole, wie 2 bis 20 Kohlenstoffatome aufweisende Kohlenwasserstoffdiole, z.B. Ethylenglycol, 1,2-Propandiol, 1,3-Propandiol, 1,1-Dimethylethan-1,2-diol, 1,6-Hexandiol, 1,10-Dekandiol, Bis-(4-hydroxycyclohexan) isopropyliden, Tetramethylcyclobutandiol, 1,2-, 1,3- oder 1,4-Cyclohexandiol, Cyclooctandiol, Norbornandiol, Pinandiol, Decalindiol, etc. deren Ester mit kurzkettigen Dicarbonsäuren, wie Adipinsäure, Cyclohexandicarbonsäure, deren Carbonate, hergestellt durch Reaktion der Diole mit Phosgen oder durch Umesterung mit Dialkyl- oder Diarylcarbonaten, oder aliphatische Diamine, wie Methylen-, und Isopropyliden-bis-(cyclohexylamin), Piperazin, 1,2-, 1,3- oder 1,4-Diaminocyclohexan, 1,2-, 1,3- oder 1,4-Cyclohexan-bis-(methylamin), etc., Dithiole oder mehrfunktionelle Alkohole, sekundäre oder primäre Aminoalkohole, wie Ethanolamin, Diethanolamin, Monopropanolamin, Dipropanolamin etc. oder Thioalkohole, wie Thioethylenglykol.

Weiterhin sind denkbar Diethylenglykol, Triethylenglykol, Dipropylenglykol, Tripropylenglykol, Neopentylglykol, Pentaerythrit, 1,2- und 1,4-Butandiol, 1,5-Pentandiol, 2-Methyl-1,5-pentandiol, 2-Ethyl-1,4-butandiol, 1,2-, 1,3- und 1,4-Dimethylolcyclohexan, Glycerin, Trimethylolethan, Trimethylolpropan, Trimethylolbutan, Dipentaerythrit, Ditrimethylolpropan, Erythrit und Sorbit, 2-Aminoethanol, 3-Amino-1-propanol, 1-Amino-2-propanol oder 2-(2-Aminoethoxy)ethanol, Bisphenol A, oder Butantriol.

Weiterhin sind auch ungesättigte Polyether- oder Polyesterole oder Polyacrylatpolyole mit einer mittleren OH-Funktionalität von 2 bis 10 geeignet, sowie Polyamine, wie z.B. Polyethylenimin oder freie Amingruppen enthaltende Polymere von z.B. Poly-N-vinylformamid.

Besonders geeignet sind hier die cycloaliphatischen Diole, wie z.B. Bis-(4-hydroxycyclohexan) isopropyliden, Tetramethylcyclobutandiol, 1,2-, 1,3- oder 1,4-Cyclohexandiol, Cyclooctandiol oder Norbornandiol.

Als Komponente f) kommen Verbindungen mit mindestens einer gegenüber Isocyanat reaktiven Gruppe in Betracht. Dies können beispielsweise 1 bis 20 Kohlenstoffatome aufweisende Monoalkohole, Mercaptane oder Monoamine sein, z.B. Methanol, Ethanol, iso-Propanol, n-Propanol, n-Butanol, *iso-*Butanol, *sek-*Butanol, tert-Butanol, Ethylenglykolmonomethylether, Ethylenglykolmonoethylether, Diethylenglykolmonomethylether, Diethylenglykolmonoethylether, 1,3-Propandiolmonomethylether, 1,2-Propandiolmonoethylether, 1,2-Propandiolmonomethylether, n-Hexanol, n-Heptanol, n-Octanol, n-Decanol, n-Dodecanol, 2-Ethylhexanol, Cyclopentanol, Cyclohexanol, Cyclooctanol, Cyclododecanol, Triethylenglykolmonomethylether, Triethylenglykolmonoethylether, n-Pentanol, Stearylalkohol, Cetylalkohol, Laurylalkohol, Cyclopent-2-en-1-ol, Cyclo-pent-3-en-1-ol, Cyclohex-2-en-1-ol, Allylalkohol, Methylamin, Ethylamin, *iso*-Propylamin, n-Propylamin, n-Butylamin, iso-Butylamin, *sek*-Butylamin, *tert*-Butylamin, n-Pentylamin, n-Hexylamin, n-Heptylamin, n-Octylamin, n-Decylamin, n-Dodecylamin, 2-Ethylhexylamin, Stearylamin, Cetylamin, Laurylamin, Dimethylamin, Diethylamin, Di-n-Propylamin, Di-*iso-*Propylamin, Di-n-Butylamin, Dihexylamin, Dioctylamin, Ethylmethylamin, Iso-Propyl-Methylamin, n-Butylmethylamin, *tert*-Butylmethylamin, *Iso*-Propyl-Ethylamin, n-Butylethylamin, *tert*-Butylethylamin, Cyclopentylamin, Cyclohexylamin, Cyclooctylamin, Cyclododecylamin, Morpholin, Piperidin, Pyrrolidin, N-Methylpiperazin, Monoethanolamin, Diethanolamin, Monopropanolamin, Dipropanolamin, Methanthiol, Ethanthiol, *iso-*Propanthiol, n-Propanthiol, n-Butanthiol, *iso*-Butanthiol, *sek*-Butanthiol oder *tert*-Butanthiol.

Als Komponenten (B) kommen solche Verbindungen in Frage, die mit Carbamaten vernetzen können. Solche reaktiven Gruppen schließen aktive Methylol oder Alkylalkoxygruppen, insbesondere Methylalkoxygruppen, an Aminoplastvernetzern, wie z.B veretherte Umsetzungsprodukte von Formaldehyd mit Aminen, wie Melamin, Harnstoff etc., Phenol/Formaldehydaddukte, Siloxan oder Silangruppen und Anhydride ein, wie sie z.B. in US 5 770 650 beschrieben sind, ein.

Unter den technisch weit verbreiteten und bekannten, bevorzugten Aminoplasten sind besonders bevorzugt Harnstoffharze und Melaminharze, wie z.B. Harnstoff-Formaldehyd-Harze, Melamin-Formaldehyd-Harze, Melamin-Phenol-Formaldehyd-Harze oder Melamin-Harnstoff-Formaldehyd-Harze, verwendbar.

Als Harnstoffharze sind solche geeignet, die durch Umsetzung von Harnstoffen mit Aldehyden erhältlich sind und gegebenenfalls modifiziert werden können.

Als Harnstoffe sind Harnstoff, N-substituierte oder N,N'-disubstituierte Harnstoffe geeignet, wie z.B. N-Methylharnstoff, N-Phenylharnstoff, N,N'-Dimethylharnstoff, Hexamethylendiharnstoff, N,N'-Diphenylharnstoff, 1,2-Ethylendiharnstoff, 1,3-Propylendiharnstoff, Diethylentriharnstoff, Dipropylentriharnstoff, 2-Hydroxypropylendiharnstoff, 2-Imidazolidinon (Ethylenharnstoff), 2-Oxohexahydropyrimidin (Propylenharnstoff) oder 2-Oxo-5-Hydroxyhexahydropyrimidin (5-Hydroxypropylenharnstoff).

Als Aldehyde sind insbesondere Formaldehyd, Acetaldehyd, *Iso*-Butyraldehyd und Glyoxal geeignet.

Harnstoffharze können gegebenenfalls teilweise oder vollständig modifiziert werden, z.B. durch Umsetzung mit mono- od. polyfunktionellen Alkoholen, Ammoniak bzw. Aminen (kationisch modifizierte Harnstoffharze) oder mit (Hydrogen)sulfiten (anionisch modifizierte Harnstoffharze), insbesondere geeignet sind erfindungsgemäß die alkoholmodifizierten Harnstoffharze.

Als Alkohole kommen für die Modifizierung C₁ - C₆-Alkohole in Frage, bevorzugt C₁ - C₄ und insbesondere Methanol, Ethanol, isoPropanol, n-Propanol, n-Butanol, *iso*-Butanol und *sek*-Butanol.

Als Melaminharze sind solche geeignet, die durch Umsetzung von Melamin mit Aldehyden erhältlich sind und gegebenenfalls teilweise oder vollständig modifiziert werden können.

Melamin-Formaldehyd-Harze sind Reaktionsprodukte der Umsetzung von Melamin mit Aldehyden, z.B. den o.g. Aldehyden, insbesondere Formaldehyd. Gegebenenfalls werden die erhaltenen Methylol-Gruppen durch Veretherung mit den oben genannten ein- oder mehrwertigen Alkoholen modifiziert. Weiterhin können die Melamin-Formaldehyd-Harze auch wie oben beschrieben durch Reaktion mit Aminen, Aminocarbonsäuren oder Sulfiten modifiziert werden.

Durch Einwirkung von Formaldehyd auf Mischungen von Melamin und Harnstoff beziehungsweise auf Mischungen aus Melamin und Phenol entstehen erfindungsgemäß ebenfalls verwendbare Melamin-Harnstoff-Formaldehyd-Harze beziehungsweise Melamin-Phenol-Formaldehyd-Harze.

Die Herstellung der genannten Aminoplaste erfolgt nach an sich bekannten Verfahren.

Besonders genannte Beispiele sind Melamin-Formaldehyd-Harze, einschließlich monomerer oder polymerer Melaminharze und teilweise oder vollständig alkylierte Melaminharze, Harnstoff-Harze, z.B. Methylolharnstoffe wie Formaldehyd-Harnstoff-Harze, Alkoxyharnstoffe wie butylierte Formaldehyd-Harnstoff-Harze, aber auch N-Methylolacrylamid-emulsionen, *iso*-Butoxy methyl acrylamid-emulsionen, Polyanhydride, wie z.B. Polybernsteinsäureanhydrid, und Siloxane oder Silane, z.B. Dimethyldimethoxysilane.

Besonders bevorzugt sind Aminoplastharze wie Melamin-Formaldehyd-Harze oder Formaldehyd-Harnstoff-Harze.

Ebenso bevorzugt sind Aminoplastharze, in denen ein oder mehrere Aminogruppen mit Carbamatgruppen substituiert sind, wie in US 5 300 328 beschrieben.

Als Photoinitiatoren (C) können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO), Ethyl-2,4,6-tri-methylbenzoylphenylphosphinat, Ethyl-2,4,6-trimethylbenzoylphenalphosphinat, Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, *tert*-Butylanthrachinon, Anthrachinoncarbonysäureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, Benzoin-*iso*-butylether, Chloroxanthenon, Benzoin-tetrahydropyranylether, Benzoin-methylether, Benzoin-ethylether, Benzoin-butylether, Benzoin-*iso*-propylether, 7-H-Benzoin-methylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclo-hexan-1-ol, 2-Hydroxy-2,2-dimethylacetophenon, 2,2-Dimethoxy-2-phenylacetophenon, o-Methoxybenzophenon, Triphenylphosphin, Tri-o-Tolylphosphin, Benz[a]anthracen-7,12-dion, 2,2-Diethoxyacetophenon, 2,2-Dimethoxy-2-phenylacetophenon, Benzilketale, wie Benzildimethylketal, 2-Methyl-1-[4-(methylthio)phenyl]-2-morpholinopropan-1-on und 2,3-Butandion.

Besonders geeignet sind nicht- oder wenig vergilbende Photoinitiatoren vom Phenylglyoxalsäureestertyp, wie in DE-A 198 26 712, DE-A 199 13 353 oder WO 98/33761 beschrieben.

Als weitere lacktypische Additive (D) können beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Als Beschleuniger für die thermische Nachhärtung kann z.B. Zinnoctoat, Zinkoctoat, Dibutylzinnlaureat oder Diaza[2.2.2]bicyclooctan verwendet werden.

Weiterhin können ein oder mehrere photochemisch und/oder thermisch aktivierbare Initiatoren zugesetzt werden, z.B. Kaliumperoxodisulfat, Dibenzoylperoxid, Cyclohexanonperoxid, Di-tert.-Butylperoxid, Azobis-iso-butyronitril, Cyclohexylsulfonylacetylperoxid, Di-iso-propylpercarbonat, tert-Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Die erfindungsgemäßen Polyurethane (A) werden durch Reaktion der Komponenten a), b) und c) miteinander erhalten.

Dabei ist die molare Zusammensetzung a):b):c) pro 3 mol reaktive Isocyanatgruppen in a) in der Regel wie folgt:
b) 0,1 - 2,9, bevorzugt 0,5 - 2,8, besonders bevorzugt 1,0 - 2,5 und insbesondere 1,5 - 2,5 mol gegenüber Isocyanat reaktive Gruppen sowie
c) 2,9 - 0,1, bevorzugt 0,2 - 2,5, besonders bevorzugt 0,5 - 2,0 und insbesondere 0,5 - 1,5 mol gegenüber Isocyanat reaktive Gruppen.

Das Polyurethan (A) kann nach Umsetzung der Komponenten a), b) und c) noch freie Isocyanatgruppen enthalten, bevorzugt sind jedoch mehr als 70 % der vor der Umsetzung in a) vorhandenen Isocyanatgruppen abreagiert, besonders bevorzugt mehr als 80 %, ganz besonders bevorzugt mehr als 90 % und insbesondere mehr als 95%.

Bei Verwendung der Polyurethane in wäßrigen Systemen sind bevorzugt im wesentlichen alle vorhandenen Isocyanatgruppen abreagiert.

Die Zusammensetzung der erfindungsgemäßen Polyurethandispersionen ist wie folgt (pro mol reaktive Isocyanatgruppe im Polyurethan (A))
d) 1 - 30 mol.-%, bevorzugt 2 - 20 mol.-%, besonders bevorzugt 3 - 15 % und insbesondere 5 - 10 mol.-% an gegenüber Isocyanat reaktiven Gruppen,
e) 0 - 50 mol.-%, bevorzugt 5 - 40 mol.-%, besonders bevorzugt 10 - 30 mol.-% und insbesondere 15 - 25 mol.-% an gegenüber Isocyanat reaktiven Gruppen,
f) 0 - 50 mol.-%, bevorzugt 5 - 40 mol.-%, besonders bevorzugt 10 - 30 mol.-% und insbesondere 15 - 25 mol.-% an gegenüber Isocyanat reaktiven Gruppen,

(B) pro mol im Polyurethan (A) enthaltener Carbamat- oder Harstoffendgruppe 1 - 5 mol Verbindung (B), besonders bevorzugt 1-3 mol, besonders bevorzugt 1,1 - 2,5 mol und insbesondere 1,5-2 mol an gegenüber Carbamat- oder Harnstoffendgruppen reaktiven Gruppen,
(C) bezogen auf das Gesamtgewicht kann die fertige Polyurethandispersion 0 - 10 Gew.-% (C) enthalten, bevorzugt 1 - 8 Gew.-%, besonders bevorzugt 2 - 7 Gew.-% und insbesondere 3 - 5 Gew.-%, sowie
(D) bezogen auf das Gesamtgewicht kann die fertige Dispersion 0 - 50 Gew.-% der Komponenten (D) enthalten, bevorzugt 5 - 40 Gew.-%, besonders bevorzugt 10 - 30 Gew.-% und insbesondere 15 - 25 Gew.-%.

Die Bildung des Addukts aus isocyanatgruppenhaltiger Verbindung und der Verbindung, die gegenüber Isocyanatgruppen reaktive Gruppen enthält erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird die isocyanatgruppenhaltige Verbindung a) vorgelegt, daraufhin b) und anschließend c) zugegeben. Nachfolgend können gegebenenfalls gewünschte weitere Komponenten zugegeben werden.

In der Regel wird die Reaktion bei Temperaturen zwischen 5 und 100 °C, bevorzugt zwischen 20 bis 90 °C und besonders bevorzugt zwischen 40 und 80°C und insbesondere zwischen 60 und 80 °C durchgeführt.

Bevorzugt wird dabei unter wasserfreien Bedingungen gearbeitet.

Wasserfrei bedeutet dabei, daß der Wassergehalt im Reaktionssystem nicht mehr als 5 Gew.-% beträgt, bevorzugt nicht mehr als 3 Gew.-% und besonders bevorzugt nicht mehr als 1 Gew.-%.

Bevorzugt wird die Reaktion in Gegenwart mindestens eines geeigneten Inertgases durchgeführt, z.B. Stickstoff, Argon, Helium, Kohlenstoffdioxid oder dergleichen.

Die Reaktion kann auch in Gegenwart eines inerten Solvens durchgeführt werden, z.B. Aceton, *Iso*-butyl-methylketon, Toluol, Xylol, Butylacetat oder Ethoxyethylacetat. Bevorzugt wird die Reaktion jedoch in Abwesenheit eines Solvens durchgeführt.

Die erfindungsgemäßen Polyurethane eignen sich besonders als Bindemittel, z.B. in Beschichtungsmassen, Anstrichstoffen oder Lakken.

Die erfindungsgemäßen Polyurethane und Polyurethandispersionen können bevorzugt als Beschichtungsmassen verwendet werden. Dazu werden sie, falls erforderlich, mit den Komponenten (B), sowie gegebenenfalls (C) und gegebenenfalls (D) versetzt.

Die Beschichtung der Substrate erfolgt nach üblichen, dem Fachmann bekannten Verfahren, wobei man wenigstens eine erfindungsgemäße Dispersion oder Lackformulierung auf das zu beschichtende Substrat in der gewünschten Stärke aufbringt und die flüchtigen Bestandteile der Dispersionen, gegebenenfalls unter Erhitzen, entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man das erfindungsgemäße Polyurethan, die erfindungsgemäße Polyurethandispersionen oder Lackformulierungen, gegebenenfalls mit weiteren lacktypischen Additiven und thermisch härtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 160°C, bevorzugt zwischen 60 und 160 °C, thermisch behandelt.

Das Verfahren zum Beschichten von Substraten kann auch so durchgeführt werden, daß nach dem Aufbringen der erfindungsgemäßen Polyurethane oder Polyurethandispersionen oder Lackformulierungen zunächst bei Temperaturen bis zu 160°C, bevorzugt zwischen 60 und 160°C, thermisch behandelt und anschließend mit Elektronenstrahlen oder UV Belichtung unter Sauerstoff oder bevorzugt unter Inertgas gehärtet wird.

Die Härtung der auf dem Substrat gebildeten Filme kann gewünschtenfalls ausschließlich thermisch erfolgen. Im allgemeinen härtet man die Beschichtungen jedoch sowohl durch Bestrahlung mit energiereicher Strahlung als auch thermisch.

Gegebenenfalls kann, wenn mehrere Schichten des Beschichtungsmittels übereinander aufgetragen werden, nach jedem Beschichtungsvorgang eine thermische und/oder Strahlungshärtung erfolgen.

Als Strahlungsquellen für die Strahlungshärtung geeignet sind z.B. Quecksilber-Niederdruckstrahler, -Mitteldruckstrahler und Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.

Diese können auch in jeweils unterschiedlichen Wellenlängebereichen strahlen.

Die Bestrahlung kann gegebenenfalls auch unter Ausschluß von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A 199 57 900 beschrieben ist.

Ein weiterer Gegenstand der Erfindung ist ein Verfahren zur Beschichtung von Substraten, wobei man
i) ein Substrat mit einer Dispersion, wie zuvor beschrieben, beschichtet,
ii) flüchtige Bestandteile der Dispersion zur Filmbildung unter Bedingungen entfernt, bei denen der Initiator (C) im wesentlichen noch keine freien Radikale ausbildet,
iii) gegebenenfalls den in Schritt ii) gebildeten Film mit energiereicher Strahlung bestrahlt, wobei der Film vorgehärtet wird, und anschließend gegebenenfalls den mit dem vorgehärteten Film beschichteten Gegenstand mechanisch bearbeitet oder die Oberfläche des vorgehärteten Films mit einem anderen Substrat in Kontakt bringt,
iv) den Film thermisch endhärtet.

Dabei können die Schritte iv) und iii) auch in umgekehrter Reihenfolge durchgeführt, d. h. der Film kann zuerst thermisch und dann mit energiereicher Strahlung gehärtet werden.

Die erfindungsgemäßen Dispersionen und Lackformulierungen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen.

Besonders bevorzugt eignen sich die erfindungsgemäßen Dispersionen als oder in Außenbeschichtungen, also solche Anwendungen, die dem Tageslicht ausgesetzt sind, bevorzugt von Gebäuden oder Gebäudeteilen, Innenbeschichtungen, Straßenmarkierungen, Beschichtungen auf Fahrzeugen und Flugzeugen. Insbesondere werden die erfindungsgemäßen Dispersionen als oder in Automobilklar- und - decklacke(n) eingesetzt.

Die erfindungsgemäßen Zusammensetzungen weisen eine gegenüber dem Stand der Technik erhöhte Lagerstabilität auf, da sie im wesentlichen nur Harnstoff- und über das Sauerstoffatom gebundene Carbamatendgruppen aufweisen und keine sonst üblichen hochreaktiven Endgruppen.

Die bei einer Härtung auftretenden Produkte sind lediglich niedrigsiedende, d.h. leichtflüchtige Alkohole oder Amine, beispielsweise die Reste R¹-NH₂ oder R²-NH₂ in c) oder die in einem Melamin- oder Harnstoffharz als Ether verwendeten Alkohole.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

Die Pendelhärte wurde nach DIN 53157 an einer Glasplatte als Substrat bestimmt. Sie ist ein Maß für die Härte einer Beschichtung. Hohe Werte für die Pendelhärte stehen für eine hohe Härte der Beschichtung.

### Beispiel 1:

### Herstellung des Polyisocyanatoacrylats:

Hexamethylendiisocyanat (HDI) wurde unter Stickstoffbedeckung vorgelegt und 50 mol.-% (bzgl. Isocyanat) stabilisiertes Hydroxyethylacrylat zugesetzt. Man erwärmte die Michung auf 80°C und gab 200 Gew.ppm (bezogen auf das Diisocyanat) des Katalysators N,N,N-Trimethyl-N-(2-hydroxypropyl)-ammonium-2-ethyl-hexanoat zu. Die Temperatur erhöhte sich langsam auf 120°C. Man ließ bei dieser Temperatur reagieren und stoppte die Reaktion bei einem NCO-Gehalt der Mischung von 16,8 Gew.-% durch Zugabe von 250 Gew.ppm (bezogen auf das Diisocyanat) (Di-(2-Ethylhexyl)-phosphat. Das Reaktionsgemisch wurde anschließend im Dünnschichtverdampfer bei 135 °C und 2,5 mbar von nicht umgesetzten HDI befreit.

Der NCO-Gehalt nach Destillation betrug 11,8 Gew.-%, die Viskosität bei 23°C betrug 1640 mPas.

### Weiterverarbeitung:

200 Teile dieses urethan- und allophanatgruppenhaltiges Polyisocyanatoacrylat werden mit 68 Teilen Hydroxypropylcarbamat (Carbalink^{®} HPC, Huntsman Corp.), in Gegenwart von 0,05 Teilen Dibutylzinndilaurat, 0,13 Teilen Hydrochinonmonomethylether und 0,27 Teilen 2,6 Di-*tert*-butyl-p-Kresol umgesetzt. Die Temperatur steigt auf 85°C. Danach wird noch 5 Stunden bei 75°C gerührt. Das Produkt ist hochviskos. Der ursprüngliche NCO-Gehalt von 11,8 % ist auf 0,1 % abgefallen.

### Beispiel 2:

Herstellen einer Dual Cure Polyurethanacrylatdispersion 200 Teile des urethan- und allophanatgruppenhaltigen Polyisocyanatoacrylats aus Beispiel 1 mit einem NCO Gehalt von 11,8 % werden in einem Rührkessel mit 20,6 Teilen 2,2-Bis-(4-hydroxycyclohexyl)propan und 20,4 Teilen Hydroxypropylcarbamat (Carbalink^{®} HPC, Huntsman Corp.) in Gegenwart von 0,25 Teilen 2,6-Di-t-butyl-p-Kresol, 0,12 Teilen Hydrochinonmonomethylether und 0,5 Teilen Dibutylzinndilaurat umgesetzt, wobei die Temperatur bis auf 85°C ansteigt, und anschließend 5 Stunden bei 60°C gerührt. Der NCO Wert beträgt 1,7 %.

Dann wird mit 3,8 Teilen Thioglykolsäure und 6,7 Teilen Hydroxyethylacrylat versetzt und weitere 4 Stunden bei 65°C gerührt. Rest NCO Wert 0,18 %. Es wird mit 4,6 Teilen Triethylamin neutralisiert, mit 1,5 Teilen Methanol versetzt und 1,5 Stunden bei Raumtemperatur gerührt. Dann wird in Wasser dispergiert.

### Beispiel 3: Dual Cure Lack

Man setzt 20 Teilen des Bindemittels aus Beispiel 1) 3,7 Teile Luwipal^{®} 066, ein kommerziell erhältliches methanolverethertes Melaminharz der BASF AG, 2 Teile einer Photoinitiatormischung aus 3,5 Teilen Irgacure^{®} 184 (Ciba) und 0,5 Teilen Lucirin^{®} TPO (BASF) zu.

### Herstellen von Filmen

Der Lack wird in Schichtdicken von ca. 40 µm auf verschiedene Substrate aufgezogen und folgendermaßen behandelt: auf einem Transportband mit der angegebenen Geschwindigkeit mit 2 UV Lampen (je 80 W/cm) bestrahlt und anschließend auf einem Gradientenofen bei den angegebenen Zeiten und Temparaturen ausgeheizt.

Der aufgezogene Lackfilm ist flüssig und klebrig (Pendelhärte < 5s). Nach der Belichtung mit 2*5m/min unter der IST Belichtungsanlage und 5 min ausheizen bei 120°C steigt die Pendelhärte auf 110s, nach 30 min ausheizen auf 130 s.

### Beispiel 4: Dual Cure Lack aus einer Dispersion

Man setzt 50 Teilen der Dispersion aus Beispiel 2) 5 Teile Luwipal^{®} 066, ein kommerziell erhältliches methanolverethertes Melaminharz der BASF AG, 2 Teile einer Photoinitiatormischung aus 3,5 Teilen Irgacure^{®} 184 (Ciba) und 0,5 Teilen Lucirin^{®} TPO (BASF) zu.

### Herstellen von Filmen

Die Dispersion wird in Schichtdicken von ca. 40 µm auf verschiedene Substrate aufgezogen und folgendermaßen behandelt: auf einem Transportband mit der angegebenen Geschwindigkeit mit 2 UV Lampen (je 80W/cm) bestrahlt und anschließend auf einem Gradientenofen bei den angegebenen Zeiten und Temperaturen ausgeheizt.

Der aufgezogene Lackfilm ist klebrig (Pendelhärte < 5 s). Nach der Belichtung mit 2*5m/min unter der IST Belichtungsanlage und 5 min ausheizen bei 120°C steigt die Pendelhärte auf 125 s, nach 30 min ausheizen auf 142 s.

## Patentansprüche

1. Polyurethan (A) enthaltend als Aufbaukomponenten
a) mindestens ein organisches aliphatisches oder cycloaliphatisches Di- oder Polyisocyanat,
b) mindestens eine Verbindung mit mindestens einer gegenüber Isocyanat reaktiven Gruppe und mindestens einer radikalisch polymerisierbaren ungesättigten Gruppe und/oder einer kationisch polymerisierbaren Gruppe,
c) mindestens eine Verbindung mit mindestens einer gegenüber Isocyanat reaktiven Gruppe und einer Carbamat- oder Harnstoffendgruppierung,
d) gegebenenfalls mindestens eine Verbindung mit mindestens einer gegenüber Isocyanat reaktiven Gruppe und mindestens einer dispergieraktiven Gruppe
e) gegebenenfalls mindestens eine Verbindung mit mindestens zwei gegenüber Isocyanat reaktiven Gruppen sowie
f) gegebenenfalls von a) bis d) verschiedene Verbindungen mit mindestens einer gegenüber Isocyanat reaktiven Gruppe.

2. Polyurethan nach Anspruch 1 enthaltend zusätzlich
(B) mindestens eine verbindung, die mindestens eine Gruppe enthält, die mit den Carbamatgruppen vernetzen kann.

3. Polyurethandispersion, enthaltend
(A) ein Polyurethan gemäß Anspruch 1, in dem die Aufbaukomponente d) vorhanden ist und
(B) mindestens eine Verbindung, die mindestens eine Gruppe Enthält, die mit den Carbamatgruppen vernetzen kann,
(C) gegebenenfalls einen oder mehrere photochemisch und/oder thermisch aktivierbare (n) Initiator (en), sowie
(D) gegebenenfalls weitere lacktypische Additive.

4. Beschichtungsmasse, enthaltend
Polyurethandispersion gemäß Anspruch 3 oder
Polyurethan (A) gemäß Anspruch 1 sowie
(B) mindestens eine Verbindung, die mindestens eine Gruppe enthält, die mit den Carbamatgruppen vernetzen kann,
(C) gegebenenfalls einen oder mehrere photochemisch und/oder thermisch aktivierbare (n) Initiator (en), sowie
(D) gegebenenfalls weitere lacktypische Additive.

5. Zusammensetzung gemäß einem der Ansprüche 2 bis 4, **dadurch gekennzeichnet, daß** die Komponente (B) mindestens ein Aminoplast enthält.

6. Verfahren zum Beschichten von Substraten, **dadurch gekennzeichnet, daß** das mit einem Material gemäß einem der Ansprüche 1 bis 5 beschichtete Substrat strahlungsgehärtet und bei Temperaturen bis zu 160 °C thermisch behandelt wird.

7. Verfahren nach Anspruch 6, **dadurch gekennzeichnet, daß** die thermische Behandlung zwischen 6D und 160°C erfolgt.

8. verfahren nach einem der Ansprüche 6 oder 7, **dadurch gekennzeichnet, daß** die Strahlungshärtung unter Inertgas durchgeführt wird.

9. Verwendung eines Polyurethans gemäß Anspruch 1 oder 2 als Bindemittel.

10. Verwendung eines Materials gemäß einem der Ansprüche 1 bis 5 zur Beschichtung von Metallen oder Kunststoffen.

11. Verwendung eines Materials gemäß einem der Ansprüche 1 bis 5 in Automobillacken und Automobildecklacken.

## Claims

1. A polyurethane (A) comprising as constituent components
a) at least one organic aliphatic or cycloaliphatic di- or polyisocyanate,
b) at least one compound containing at least one isocyanate-reactive group and at least one free-radically polymerizable unsaturated group and/or a cationically polymerizable group,
c) at least one compound containing at least one isocyanate-reactive group and a carbamate or urea end group,
d) if appropriate, at least one compound containing at least one isocyanate-reactive group and at least one dispersing group,
e) if appropriate, at least one compound containing at least two isocyanate-reactive groups, and
f) if appropriate, compounds other than a) to d) containing at least one isocyanate-reactive group.

2. The polyurethane according to claim 1 further comprising
(B) at least one compound comprising at least one group that can crosslink with the carbamate groups.

3. A polyurethane dispersion comprising
(A) a polyurethane according to claim 1 wherein component d) is present and
(B) at least one compound comprising at least one group that can crosslink with the carbamate groups,
(C) if appropriate, one or more initiators which can be activated photochemically and/or thermally, and
(D) if appropriate, further typical coatings additives.

4. A coating material comprising
a polyurethane dispersion according to claim 3 or
a polyurethane (A) according to claim 1 and
(B) at least one compound comprising at least one group that can crosslink with the carbamate groups,
(C) if appropriate, one or more initiators which can be activated photochemically and/or thermally, and
(D) if appropriate, further typical coatings additives.

5. A composition according to any of claims 2 to 4, wherein component (B) comprises at least one amino resin.

6. A method of coating substrates which comprises radiation-curing a substrate coated with a material according to any of claims 1 to 5 and heat-treating at temperatures up to 160°C.

7. The method according to claim 6, wherein the heat treatment takes place at between 60 and 160°C.

8. The method according to either of claims 6 and 7, wherein the radiation cure is conducted under inert gas.

9. The use of a polyurethane according to claim 1 or 2 as a binder.

10. The use of a material according to any of claims 1 to 5 to coat metals or plastics.

11. The use of a material according to any of claims 1 to 5 in automotive paints and automotive topcoats.

## Revendications

1. Polyuréthanne (A) contenant, comme composants constitutifs,
a) au moins un diisocyanate ou polyisocyanate aliphatique ou cycloaliphatique organique,
b) au moins un composé comportant au moins un groupe réactif vis-à-vis d'un isocyanate et au moins un groupe insaturé polymérisable par voie radicalaire et/ou un groupe polymérisable par voie cationique,
c) au moins un composé comportant au moins un groupe réactif vis-à-vis d'un isocyanate et un groupement terminal carbamate ou urée,
d) éventuellement au moins un composé comportant au moins un groupe réactif vis-à-vis d'un isocyanate et au moins un groupe à activité de dispersion,
e) éventuellement au moins un composé comportant au moins deux groupes réactifs vis-à-vis d'un isocyanate, ainsi que
f) éventuellement des composés différents de a) à d) comportant au moins un groupe réactif vis-à-vis d'un isocyanate.

2. Polyuréthanne suivant la revendication 1, contenant en supplément
(B) au moins un composé qui contient au moins un groupe qui peut réticuler avec les groupes carbamate.

3. Dispersion de polyuréthanne, contenant
(A)un polyuréthanne suivant la revendication 1, dans lequel le composant constitutif d) est présent, et
(B) au moins un composé qui contient au moins un groupe qui peut réticuler avec les groupes carbamate,
(C)éventuellement un ou plusieurs amorceurs photochimiquement et/ou thermiquement activables, ainsi que
(D)éventuellement d'autres additifs de type vernis.

4. Masse de recouvrement, contenant
une dispersion de polyuréthanne suivant la revendication 3 ou
un polyuréthanne (A) selon la revendication 1, ainsi que
(B) au moins un composé qui contient au moins un groupe qui peut réticuler avec les groupes carbamate,
(C)éventuellement un ou plusieurs amorceurs photochimiquement et/ou thermiquement activables, ainsi que
(D)éventuellement d'autres additifs de type vernis.

5. Composition suivant l'une des revendications 2 à 4, **caractérisée en ce que** le composant (B) contient au moins un aminoplaste.

6. Procédé de recouvrement de substrats, **caractérisé en ce que** le substrat recouvert d'une matière suivant l'une des revendications 1 à 5 est durci par rayonnement et traité thermiquement à des températures jusqu'à 160°C.

7. Procédé suivant la revendication 6, **caractérisé en ce que** le traitement thermique a lieu entre 60 et 160°C.

8. Procédé suivant l'une des revendications 6 et 7, **caractérisé en ce que** le durcissement par rayonnement est effectué sous un gaz inerte.

9. Utilisation d'un polyuréthanne suivant la revendication 1 ou 2, comme liant.

10. Utilisation d'une matière suivant l'une des revendications 1 à 5, pour le recouvrement de métaux ou de substances synthétiques.

11. Utilisation d'une matière suivant l'une des revendications 1 à 5, dans des vernis pour automobile et des vernis de finition pour automobile.
